# EUROPEAN PATENT APPLICATION

(11) **EP 3 399 784 A1**
(43) Date of publication of application: **07.11.2018**
(21) Application number: 16888673.7
(22) Date of filing: 02.02.2016
(51) Int. Cl.: H04W 16/10

(54) **TTI CONFIGURATION METHOD, DEVICE AND SYSTEM**

(71) Applicant: Huawei Technologies Co., Ltd., Longgang District Shenzhen, Guangdong 518129 (CN)
(72) Inventor: TANG, Xun, Shenzhen Guangdong 518129 (CN); MIAO, Jinhua, Shenzhen Guangdong 518129 (CN); QUAN, Wei, Shenzhen Guangdong 518129 (CN); ZHANG, Jian, Shenzhen Guangdong 518129 (CN)
(74) Representative: Gill Jennings & Every LLP
(86) International application number: PCT/CN2016/073234
(87) International publication number: WO 2017/132848

(57) **Abstract**

The present invention relates to the field of wireless communications, discloses a TTI configuration method, a device, and a system, so as to resolve a problem that there is no method for configuring a short TTI. The TTI configuration method includes: receiving, by a network device, TTI request information, where the TTI request information indicates a TTI length requested to be used; and responding to the TTI request information, and sending TTI indication information, where the TTI indication information includes at least one of the following information: a TTI length assigned by the network device, effective moment information, start symbol location information, and enabling confirm information of the TTI length. Embodiments of the present invention are applied to LTE communication.

## Description

### TECHNICAL FIELD

The present invention relates to the field of wireless communications, and in particular, to a TTI configuration method, a device, and a system.

### BACKGROUND

In a conventional LTE (English name: Long Term Evolution, Chinese name: Long Term Evolution) communication protocol, a TTI (English name: transmission time interval, Chinese name: transmission time interval) is a basic time unit in time domain of LTE radio resources, and has a standard time length that is 1 ms (briefly referred to as a TTI of 1 ms below).

Currently, research is being carried on use of a TTI of a shorter time length (having a shorter time length than that of the TTI of 1 ms, and briefly referred to as a short TTI below) in an LTE system. Compared with use of the TTI of 1 ms, use of the short TTI has the following benefits: After a TTI length is reduced, a round trip transmission delay of a single packet is reduced accordingly, so as to be quite helpful to a rapid increase of a window length at a slow start stage of TCP, and a data throughput at the slow start stage can be obviously increased. Therefore, after the TTI length is reduced, a transmission delay of a small packet can be obviously reduced. In addition, in a case of the short TTI, a HARQ feedback and a CSI feedback are both faster, so that a better link adaptation characteristic can be obtained.

In a subsequent continuous evolution process of the LTE protocol, the short TTI is introduced, and meanwhile, to be compatible with the TTI of 1 ms, TTIs of a plurality of time lengths coexist. Therefore, it is inevitable to confront a problem of how to configure the short TTI, that is, how an eNB (English name: evolved node basestation, Chinese name: evolved NodeB) instructs UE (English name: user equipment, Chinese name: user equipment) to use a short TTI resource and how the UE uses the short TTI resource. Currently, in the prior art, there is no method for configuring the short TTI.

### SUMMARY

Embodiments of the present invention provide a TTI configuration method, a device, and a system, so as to resolve a problem that there is no method for configuring a short TTI.

To achieve the foregoing objective, the following technical solutions are used in the embodiments of the present invention.

According to a first aspect, a TTI configuration method is provided, specifically including the following steps:
receiving, by a network device, TTI request information sent by user equipment, where the TTI request information indicates a TTI length requested to be used; and
responding, by the network device, to the TTI request information, and sending TTI indication information to the user equipment, where the TTI indication information includes at least one of the following information:
a TTI length assigned by the network device to the user equipment, effective moment information, start symbol location information, and enabling confirm information of the TTI length.

In this implementation, the user equipment sends the TTI request information to the network device, where the TTI request information indicates the TTI length that the user equipment requests to use; the network device receives the TTI request information sent by the user equipment; the network device obtains, according to the TTI request information, the TTI length that the user equipment requests to use; the network device sends the TTI indication information to the user equipment, where the TTI indication information includes at least one of the following information: a TTI length assigned by the network device to the user equipment, effective moment information, start symbol location information, and enabling confirm information of the TTI length; and the user equipment communicates with the network device by using the TTI length assigned by the network device to the user equipment and/or an effective moment and/or a start symbol location. The user equipment requests from the network device to use a TTI length, where the TTI length includes a short TTI, and the network device assigns a corresponding TTI length for the request of the user equipment, so as to resolve a problem that there is no method for configuring a short TTI.

With reference to the first aspect, in a first possible implementation, before the receiving, by a network device, TTI request information sent by user equipment, the method includes:
broadcasting, by the network device, a TTI length supported by the network device to the user equipment.

With reference to the first aspect, in a second possible implementation, the responding to the TTI request information includes:
obtaining, according to information content of the TTI request information, the TTI length that the user equipment requests to use, where the information content of the TTI request information corresponds to the TTI length that the user equipment requests to use.

With reference to the first aspect, in a third possible implementation, the responding to the TTI request information includes:
obtaining, according to a resource occupied by the TTI request information, the TTI length that the user equipment requests to use, where the occupied resource corresponds to the TTI length that the user equipment requests to use.

With reference to the second possible implementation of the first aspect, in a fourth possible implementation,
the receiving, by a network device, TTI request information sent by user equipment includes:
receiving, by the network device, a random access preamble sent by the user equipment, where the random access preamble indicates the TTI length requested to be used;
the responding to the TTI request information includes:
obtaining, according to the random access preamble, the TTI length requested to be used; and
the sending TTI indication information to the user equipment includes:
sending a random access response message to the user equipment, where the TTI indication information is indicated in the random access response message.

In this implementation, in a random access process, the UE indicates, by using a random access preamble, a TTI length requested by the UE, and an eNB indicates, by using a random access response message, a TTI length assigned to the UE for the request, so as to configure a TTI by using the random access preamble in the random access process, and resolve a problem that there is no method for configuring a short TTI.

With reference to the fourth possible implementation of the first aspect, in a fifth possible implementation, the indicating the TTI indication information in the random access response message includes:
indicating the TTI indication information by adding a byte to the random access response message; or
indicating the TTI indication information by reusing one or more optional bits of an uplink scheduling grant message in the random access response message.

With reference to the third possible implementation of the first aspect, in a sixth possible implementation,
the receiving, by a network device, TTI request information sent by user equipment includes:
receiving, by the network device, a random access preamble of the user equipment on a preset time-frequency resource, where the preset time-frequency resource corresponds to the TTI length that the user equipment requests to use; and
the obtaining, according to a resource occupied by the TTI request information, the TTI length that the user equipment requests to use includes:
obtaining, according to the preset time-frequency resource occupied by the random access preamble, the TTI length that the user equipment requests to use.

In this implementation, in a random access process, the UE indicates, by using a resource occupied by a random access preamble, a TTI length requested by the UE, and an eNB indicates, by using a random access response message, a TTI length assigned to the UE for the request, so as to configure a TTI by using the resource occupied by the random access preamble in the random access process, and resolve a problem that there is no method for configuring a short TTI.
With reference to the third possible implementation of the first aspect, in a seventh possible implementation,
the receiving, by a network device, TTI request information sent by user equipment includes:
receiving, by the network device, scheduling request information sent by the user equipment on a preset scheduling request resource, where the preset scheduling request resource corresponds to the TTI length requested to be used; and
the obtaining, according to a resource occupied by the TTI request information, the TTI length requested to be used includes:
obtaining, according to a preset time-frequency resource occupied by the scheduling request information, the TTI length requested to be used.

In this implementation, in a scheduling request process, the UE indicates, by using a preset scheduling request resource occupied by scheduling request information, a TTI length requested by the UE, and an eNB indicates, by using an uplink scheduling grant message, a TTI length assigned to the UE for the request, so as to configure a TTI in the scheduling request process of the user equipment, and resolve a problem that there is no method for configuring a short TTI.

With reference to the second possible implementation of the first aspect, in an eighth possible implementation,
the receiving, by a network device, TTI request information sent by user equipment includes:
receiving, by the network device, a buffer status report message sent by the user equipment, where a value of one or more reserved bits of the buffer status report message indicates the TTI length that the user equipment requests to use; and
the obtaining, according to information content of the TTI request information, the TTI length requested to be used includes:
obtaining, according to the value of the one or more reserved bits of the buffer status report message, the TTI length requested to be used.

In this implementation, in a buffer status report process, the UE indicates, by using a value of one or more reserved bits of a buffer status report message, a TTI length requested by the UE, and an eNB indicates, by using an uplink scheduling grant message, a TTI length assigned to the UE for the request, so as to configure a TTI in the buffer status report process of the UE, and resolve a problem that there is no method for configuring a short TTI.

With reference to the second possible implementation of the first aspect, in a ninth possible implementation,
the receiving, by a network device, TTI request information sent by user equipment includes:
receiving, by the network device, a MAC CE sent by the user equipment, where an uplink LCID value in a message header of the MAC CE indicates that a type of the MAC CE is TTI request information, and a message body of the MAC CE indicates the requested TTI length;
the obtaining, according to information content of the TTI request information, the TTI length requested to be used includes:
obtaining, according to the message header and the message body of the MAC CE, the TTI length requested to be used; and
the sending TTI indication information to the user equipment includes:
sending a MAC CE to the user equipment, where a downlink LCID value in a message header of the MAC CE indicates that a type of the MAC CE is TTI indication information, and a message body of the MAC CE includes the TTI indication information.

In this implementation, the UE indicates, by using a message header and a message body of a MAC CE, a TTI length requested by the UE, and an eNB indicates, by using the MAC CE, a TTI length assigned to the UE for the request, and extends the MAC CE to which a BSR message belongs to configure a TTI, so as to resolve a problem that there is no method for configuring a short TTI.

With reference to the second possible implementation of the first aspect, in a tenth possible implementation,
the receiving, by a network device, TTI request information sent by user equipment includes:
receiving, by the network device, an RRC connection setup request message sent by the user equipment, where a TTI related information element of the RRC connection setup request message indicates the TTI length requested to be used;
the obtaining, according to information content of the TTI request information, the TTI length requested to be used includes: obtaining, according to the TTI related information element of the RRC connection setup request message, the TTI length requested to be used; and
the sending TTI indication information to the user equipment includes:
sending an RRC connection setup message or an RRC reconfiguration message to the user equipment, where the RRC connection setup message or the RRC reconfiguration message includes the TTI indication information.

In this implementation, in an RRC connection setup process, the UE indicates, by using a TTI related information element of an RRC connection setup request message, a TTI length requested by the UE, and an eNB indicates, by using an RRC connection reconfiguration message, a TTI length assigned to the UE for the request, so as to configure a TTI in the RRC connection setup process, and resolve a problem that there is no method for configuring a short TTI.

With reference to the second possible implementation of the first aspect, in an eleventh possible implementation,
the sending TTI indication information to the user equipment includes:
sending a handover command message to the user equipment, where the handover command message includes the TTI indication information.

In this implementation, in a handover preparation stage, a source eNB may add, to a handover request message sent to a target eNB, an indication indicating that the UE has a short TTI communication capability, the target eNB adds TTI indication information to a handover confirm message sent to the source eNB, and the source eNB sends a handover command message to the UE, where the handover command message includes the TTI indication information, and the TTI indication information includes a TTI length assigned by the eNB to the UE, so as to configure a TTI in the handover preparation stage, and resolve a problem that there is no method for configuring a short TTI.

According to a second aspect, a TTI configuration method is provided, specifically including the following steps:
sending, by user equipment, TTI request information to a network device, where the TTI request information indicates a TTI length that the user equipment requests to use; and
receiving TTI indication information sent by the network device, where the TTI indication information includes at least one of the following information:
a TTI length assigned to the user equipment, effective moment information, start symbol location information, and enabling confirm information of the TTI length.

In this implementation, the user equipment sends the TTI request information to the network device, where the TTI request information indicates the TTI length that the user equipment requests to use; the network device receives the TTI request information sent by the user equipment; the network device obtains, according to the TTI request information, the TTI length that the user equipment requests to use; the network device sends the TTI indication information to the user equipment, where the TTI indication information includes at least one of the following information: a TTI length assigned by the network device to the user equipment, effective moment information, start symbol location information, and enabling confirm information of the TTI length; and the user equipment communicates with the network device by using the TTI length assigned by the network device to the user equipment and/or an effective moment and/or a start symbol location. The user equipment requests from the network device to use a TTI length, where the TTI length includes a short TTI, and the network device assigns a corresponding TTI length for the request of the user equipment, so as to resolve a problem that there is no method for configuring a short TTI.

With reference to the second aspect, in a first possible implementation, before the sending, by user equipment, TTI request information to a network device, the method includes:
receiving a TTI length supported by the network device.

With reference to the second aspect, in a second possible implementation, the indicating, by the TTI request information, the TTI length that the user equipment requests to use includes:
indicating, by using information content of the TTI request information, the TTI length that the user equipment requests to use, where the information content of the TTI request information corresponds to the TTI length that the user equipment requests to use.

With reference to the second aspect, in a third possible implementation, the indicating, by the TTI request information, the TTI length that the user equipment requests to use includes:
indicating, by using a resource occupied by the TTI request information, the TTI length that the user equipment requests to use, where the occupied resource corresponds to the TTI length that the user equipment requests to use.

With reference to the second possible implementation of the second aspect, in a fourth possible implementation,
the sending, by user equipment, TTI request information to a network device includes:
sending, by the user equipment, a random access preamble to the network device, where the random access preamble indicates the TTI length that the user equipment requests to use; and
the receiving TTI indication information sent by the network device includes:
receiving a random access response message sent by the network device, where the TTI indication information is indicated in the random access response message.

In this implementation, in a random access process, the UE indicates, by using a random access preamble, a TTI length requested by the UE, and an eNB indicates, by using a random access response message, a TTI length assigned to the UE for the request, so as to configure a TTI by using the random access preamble in the random access process, and resolve a problem that there is no method for configuring a short TTI.

With reference to the fourth possible implementation of the second aspect, in a fifth possible implementation, the indicating the TTI indication information in the random access response message includes:
indicating the TTI indication information by adding a byte to the random access response message; or
indicating the TTI indication information by reusing one or more optional bits of an uplink scheduling grant message in the random access response message.

With reference to the third possible implementation of the second aspect, in a sixth possible implementation,
the sending, by user equipment, TTI request information to a network device includes:
sending, by the user equipment, a random access preamble on a preset time-frequency resource, where the preset time-frequency resource corresponds to the TTI length that the user equipment requests to use; and
the receiving TTI indication information sent by the network device includes:
receiving a random access response message sent by the network device, where the random access response message includes the TTI indication information.

In this implementation, in a random access process, the UE indicates, by using a resource occupied by a random access preamble, a TTI length requested by the UE, and an eNB indicates, by using a random access response message, a TTI length assigned to the UE for the request, so as to configure a TTI by using the resource occupied by the random access preamble in the random access process, and resolve a problem that there is no method for configuring a short TTI.

With reference to the third possible implementation of the second aspect, in a seventh possible implementation,
the sending, by user equipment, TTI request information to a network device includes:
sending, by the user equipment, scheduling request information to the network device on a preset scheduling request resource, where the preset scheduling request resource corresponds to the TTI length that the user equipment requests to use.

In this implementation, in a scheduling request process, the UE indicates, by using a preset scheduling request resource occupied by scheduling request information, a TTI length requested by the UE, and an eNB indicates, by using an uplink scheduling grant message, a TTI length assigned to the UE for the request, so as to configure a TTI in the scheduling request process of the user equipment, and resolve a problem that there is no method for configuring a short TTI.

With reference to the second possible implementation of the second aspect, in an eighth possible implementation,
the sending, by user equipment, TTI request information to a network device includes:
sending, by the user equipment, a buffer status report message to the network device, where a value of one or more reserved bits of the buffer status report message indicates the TTI length that the user equipment requests to use.

In this implementation, in a buffer status report process, the UE indicates, by using a value of one or more reserved bits of a buffer status report message, a TTI length requested by the UE, and an eNB indicates, by using an uplink scheduling grant message, a TTI length assigned to the UE for the request, so as to configure a TTI in the buffer status report process of the UE, and resolve a problem that there is no method for configuring a short TTI.

With reference to the second possible implementation of the second aspect, in a ninth possible implementation,
the sending, by user equipment, TTI request information to a network device includes:
sending, by the user equipment, a MAC CE to the network device, where an uplink LCID value in a message header of the MAC CE indicates that a type of the MAC CE is TTI request information, and a message body of the MAC CE indicates the requested TTI length; and
the receiving TTI indication information sent by the network device includes:
receiving a MAC CE sent by the network device, where a downlink LCID value in a message header of the MAC CE indicates that a type of the MAC CE is TTI indication information, and a message body of the MAC CE includes the TTI indication information.

In this implementation, the UE indicates, by using a message header and a message body of a MAC CE, a TTI length requested by the UE, and an eNB indicates, by using the MAC CE, a TTI length assigned to the UE for the request, and extends the MAC CE to which a BSR message belongs to configure a TTI, so as to resolve a problem that there is no method for configuring a short TTI.

With reference to the second possible implementation of the second aspect, in a tenth possible implementation,
the sending, by user equipment, TTI request information to a network device includes:
sending, by the user equipment, an RRC connection setup request message to the network device, where a TTI related information element of the RRC connection setup request message indicates the TTI length that the user equipment requests to use; and
the receiving TTI indication information sent by the network device includes:
receiving an RRC connection setup message or an RRC reconfiguration message sent by the network device, where the RRC connection setup message or the RRC reconfiguration message includes the TTI indication information.

In this implementation, in an RRC connection setup process, the UE indicates, by using a TTI related information element of an RRC connection setup request message, a TTI length requested by the UE, and an eNB indicates, by using an RRC connection reconfiguration message, a TTI length assigned to the UE for the request, so as to configure a TTI in the RRC connection setup process, and resolve a problem that there is no method for configuring a short TTI.

With reference to the second possible implementation of the second aspect, in an eleventh possible implementation,
the receiving TTI indication information sent by the network device includes:
receiving a handover command message sent by the network device, where the handover command message includes the TTI indication information.

In this implementation, in a handover preparation stage, a source eNB may add, to a handover request message sent to a target eNB, an indication indicating that the UE has a short TTI communication capability, the target eNB adds TTI indication information to a handover confirm message sent to the source eNB, and the source eNB sends a handover command message to the UE, where the handover command message includes the TTI indication information, and the TTI indication information includes a TTI length assigned by the eNB to the UE, so as to configure a TTI in the handover preparation stage, and resolve a problem that there is no method for configuring a short TTI.

According to a third aspect, a network device is provided, including:
a receiving unit, configured to receive TTI request information sent by user equipment, where the TTI request information indicates a TTI length requested to be used; and
a sending unit, configured to respond to the TTI request information received by the receiving unit, and send TTI indication information to the user equipment, where the TTI indication information includes at least one of the following information:
   a TTI length assigned by the network device, effective moment information, start symbol location information, and enabling confirm information of the TTI length.

With reference to the third aspect, in a first possible implementation,
the sending unit is further configured to: before the receiving unit receives the TTI request information, broadcast a TTI length supported by the network device to the user equipment.

With reference to the third aspect, in a second possible implementation, the network device further includes:
a processing unit, configured to obtain, according to information content of the TTI request information, the TTI length requested to be used, where the information content of the TTI request information corresponds to the TTI length requested to be used.

With reference to the third aspect, in a third possible implementation, the network device further includes:
a processing unit, configured to obtain, according to a resource occupied by the TTI request information, the TTI length requested to be used, where the occupied resource corresponds to the TTI length requested to be used.

With reference to the second possible implementation of the third aspect, in a fourth possible implementation,
the receiving unit is further configured to receive a random access preamble sent by the user equipment, where the random access preamble indicates the TTI length requested to be used;
the processing unit is further configured to obtain, according to the random access preamble, the TTI length requested to be used; and
the sending unit is further configured to send a random access response message to the user equipment, where the TTI indication information is indicated in the random access response message.

With reference to the fourth possible implementation of the third aspect, in a fifth possible implementation, the sending unit is further configured to:
indicate the TTI indication information by adding a byte to the random access response message; or
indicate the TTI indication information by reusing one or more optional bits of an uplink scheduling grant message in the random access response message.

With reference to the third possible implementation of the third aspect, in a sixth possible implementation,
the receiving unit is further configured to receive a random access preamble sent by the user equipment on a preset time-frequency resource, where the preset time-frequency resource corresponds to the TTI length requested to be used;
the processing unit is further configured to obtain, according to the preset time-frequency resource occupied by the random access preamble, the TTI length requested to be used; and
the sending unit is further configured to send a random access response message to the user equipment, where the random access response message includes the TTI indication information.

With reference to the third possible implementation of the third aspect, in a seventh possible implementation,
the receiving unit is further configured to receive scheduling request information sent by the user equipment on a preset scheduling request resource, where the preset scheduling request resource corresponds to the TTI length requested to be used; and
the processing unit is further configured to obtain, according to a preset time-frequency resource occupied by the scheduling request information, the TTI length requested to be used.

With reference to the second possible implementation of the third aspect, in an eighth possible implementation,
the receiving unit is further configured to receive a buffer status report message sent by the user equipment, where a value of one or more reserved bits of the buffer status report message indicates the TTI length requested to be used; and
the processing unit is further configured to obtain, according to the value of the one or more reserved bits of the buffer status report message, the TTI length requested to be used.

With reference to the second possible implementation of the third aspect, in a ninth possible implementation,
the receiving unit is further configured to receive a MAC CE sent by the user equipment, where an uplink LCID value in a message header of the MAC CE indicates that a type of the MAC CE is TTI request information, and a message body of the MAC CE indicates the requested TTI length;
the processing unit is further configured to obtain, according to the message header and the message body of the MAC CE, the TTI length requested to be used; and
the sending unit is further configured to send a MAC CE to the user equipment, where a downlink LCID value in a message header of the MAC CE indicates that a type of the MAC CE is TTI indication information, and a message body of the MAC CE includes the TTI indication information.

With reference to the second possible implementation of the third aspect, in a tenth possible implementation,
the receiving unit is further configured to receive an RRC connection setup request message sent by the user equipment, where a TTI related information element of the RRC connection setup request message indicates the TTI length requested to be used;
the processing unit is further configured to obtain, according to the TTI related information element of the RRC connection setup request message, the TTI length requested to be used; and
the sending unit is further configured to send an RRC connection setup message or an RRC reconfiguration message to the user equipment, where the RRC connection setup message or the RRC reconfiguration message includes the TTI indication information.

With reference to the second possible implementation of the third aspect, in an eleventh possible implementation,
the sending unit is further configured to send a handover command message to the user equipment, where the handover command message includes the TTI indication information.

The network device provided in this embodiment of the present invention can be configured to perform the method according to the first aspect or any possible implementation of the first aspect. Therefore, for a technical effect that can be achieved by the network device, refer to a technical effect of the positioning method according to the first aspect or any possible implementation of the first aspect. Details are not described herein again.

According to a fourth aspect, user equipment is provided, including:
a sending unit, configured to send TTI request information to a network device, where the TTI request information indicates a TTI length that the user equipment requests to use; and
a receiving unit, configured to receive TTI indication information sent by the network device, where the TTI indication information includes at least one of the following information:
a TTI length assigned to the user equipment, effective moment information, start symbol location information, and enabling confirm information of the TTI length.

With reference to the fourth aspect, in a first possible implementation,
the receiving unit is further configured to: before the sending unit sends the TTI request information to the network device, receive a TTI length supported by the network device.

With reference to the fourth aspect, in a second possible implementation, the user equipment further includes:
a processing unit, configured to indicate, by using information content of the TTI request information, the TTI length that the user equipment requests to use, where the information content of the TTI request information corresponds to the TTI length that the user equipment requests to use.

With reference to the fourth aspect, in a third possible implementation, the user equipment further includes:
a processing unit, configured to indicate, by using a resource occupied by the TTI request information, the TTI length that the user equipment requests to use, where the occupied resource corresponds to the TTI length that the user equipment requests to use.

With reference to the second possible implementation of the fourth aspect, in a fourth possible implementation,
the sending unit is further configured to send a random access preamble to the network device, where the random access preamble indicates the TTI length that the user equipment requests to use; and
the receiving unit is further configured to receive a random access response message sent by the network device, where the TTI indication information is indicated in the random access response message.

With reference to the fourth possible implementation of the fourth aspect, in a fifth possible implementation, the processing unit is further configured to:
indicate the TTI indication information by adding a byte to the random access response message; or
indicate the TTI indication information by reusing one or more optional bits of an uplink scheduling grant message in the random access response message.

With reference to the third possible implementation of the fourth aspect, in a sixth possible implementation,
the sending unit is further configured to send a random access preamble to the network device on a preset time-frequency resource, where the preset time-frequency resource corresponds to the TTI length that the user equipment requests to use; and
the receiving unit is further configured to receive a random access response message sent by the network device, where the random access response message includes the TTI indication information.

With reference to the third possible implementation of the fourth aspect, in a seventh possible implementation,
the sending unit is further configured to send scheduling request information to the network device on a preset scheduling request resource, where the preset scheduling request resource corresponds to the TTI length that the user equipment requests to use.

With reference to the second possible implementation of the fourth aspect, in an eighth possible implementation,
the sending unit is further configured to send a buffer status report message to the network device, where a value of one or more reserved bits of the buffer status report message indicates the TTI length that the user equipment requests to use.

With reference to the second possible implementation of the fourth aspect, in a ninth possible implementation,
the sending unit is further configured to send a MAC CE to the network device, where an uplink LCID value in a message header of the MAC CE indicates that a type of the MAC CE is TTI request information, and a message body of the MAC CE indicates the requested TTI length; and
the receiving unit is further configured to receive a MAC CE sent by the network device, where a downlink LCID value in a message header of the MAC CE indicates that a type of the MAC CE is TTI indication information, and a message body of the MAC CE includes the TTI indication information.

With reference to the second possible implementation of the fourth aspect, in a tenth possible implementation,
the sending unit is further configured to send an RRC connection setup request message to the network device, where a TTI related information element of the RRC connection setup request message indicates the TTI length that the user equipment requests to use; and
the receiving unit is further configured to receive an RRC connection setup message or an RRC reconfiguration message sent by the network device, where the RRC connection setup message or the RRC reconfiguration message includes the TTI indication information.

With reference to the second possible implementation of the fourth aspect, in an eleventh possible implementation,
the receiving unit is further configured to receive a handover command message sent by the network device, where the handover command message includes the TTI indication information.

The user equipment provided in this embodiment of the present invention can be configured to perform the method according to the second aspect or any possible implementation of the second aspect. Therefore, for a technical effect that can be achieved by the user equipment, refer to a technical effect of the positioning method according to the second aspect or any possible implementation of the second aspect. Details are not described herein again.

According to a fifth aspect, a network device is provided, including: a processor, a first interface circuit, a second interface circuit, a memory, and a bus, where the processor, the first interface circuit, and the memory are connected by using the bus and communicate with each other; and the processor is configured to execute program code in the memory to control the first interface circuit and the second interface circuit to perform the method provided in the first aspect or a possible implementation in the first aspect.

Optionally, the processor may be configured to perform a function of the processing unit in the third aspect or a possible implementation in the third aspect.

The first interface circuit is configured to perform a function of the receiving unit in the third aspect or a possible implementation in the third aspect.

The second interface unit is configured to perform a function of the sending unit in the third aspect or a possible implementation in the third aspect.

The network device provided in this embodiment of the present invention can be configured to perform the method according to the first aspect or any possible implementation of the first aspect. Therefore, for a technical effect that can be achieved by the network device, refer to a technical effect of the positioning method according to the first aspect or any possible implementation of the first aspect. Details are not described herein again.

According to a sixth aspect, user equipment is provided, including: a processor, a first interface circuit, a second interface circuit, a memory, and a bus, where the processor, the first interface circuit, the second interface circuit, and the memory are connected by using the bus and communicate with each other; and the processor is configured to execute a program in the memory to control the first interface circuit and the second interface circuit to perform the method provided in the second aspect or a possible implementation in the second aspect.

Optionally, the processor may be configured to perform a function of a detection unit and the processing unit in the fourth aspect or a possible implementation in the fourth aspect.

The first interface circuit is configured to perform a function of the sending unit in the fourth aspect or a possible implementation in the fourth aspect.

The second interface unit is configured to perform a function of the receiving unit according to the fourth aspect or the possible implementations of the fourth aspect.

The user equipment provided in this embodiment of the present invention can be configured to perform the method according to the second aspect or any possible implementation of the second aspect. Therefore, for a technical effect that can be achieved by the user equipment, refer to a technical effect of the positioning method according to the second aspect or any possible implementation of the second aspect. Details are not described herein again.

According to a seventh aspect, a communications system is provided, including the eNB according to any one of the third aspect or the possible implementations of the third aspect, and the UE according to any one of the fourth aspect or the possible implementations of the fourth aspect; or including the eNB according to the fifth aspect, and the UE according to the sixth aspect.

The communications system provided in this embodiment of the present invention includes the eNB according to the third aspect or the possible implementations in the third aspect, and the UE according to the fourth aspect or the possible implementations in the fourth aspect; or includes the eNB according to the fifth aspect, and the UE according to the sixth aspect. Therefore, for a technical effect that can be achieved by the communications system, refer to the technical effects of the eNB and the UE. Details are not described herein again.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a communications system according to an embodiment of the present invention;
FIG. 2 is a schematic flowchart of a TTI configuration method according to an embodiment of the present invention;
FIG. 3 is a schematic flowchart of configuring a TTI by using a random access preamble in a random access process according to an embodiment of the present invention;
FIG. 4 is a schematic structural diagram of a MAC PDU of a random access response message according to an embodiment of the present invention;
FIG. 5 is a schematic structural diagram of a random access response message according to an embodiment of the present invention;
FIG. 6 is a schematic flowchart of configuring a TTI by using a resource occupied by a random access preamble in a random access process according to an embodiment of the present invention;
FIG. 7 is a schematic flowchart of configuring a TTI in a scheduling request process according to an embodiment of the present invention;
FIG. 8 is a schematic flowchart of configuring a TTI in a buffer status report process according to an embodiment of the present invention;
FIG. 9 is a schematic structural diagram of a message header of a BSR according to an embodiment of the present invention;
FIG. 10 is a schematic flowchart of extending a MAC CE to which a BSR message belongs to configure a TTI according to an embodiment of the present invention;
FIG. 11 is a schematic flowchart of configuring a TTI in an RRC connection setup process according to an embodiment of the present invention;
FIG. 12 is a schematic flowchart of configuring a TTI in a handover preparation stage according to an embodiment of the present invention;
FIG. 13 is a schematic structural diagram of a network device according to an embodiment of the present invention;
FIG. 14 is a schematic structural diagram of another network device according to an embodiment of the present invention;
FIG. 15 is a schematic structural diagram of user equipment according to an embodiment of the present invention;
FIG. 16 is a schematic structural diagram of another user equipment according to an embodiment of the present invention;
FIG. 17 is a schematic structural diagram of still another network device according to an embodiment of the present invention; and
FIG. 18 is a schematic structural diagram of still another user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Terms such as "component", "module", and "system" used in this application are used to indicate computer-related entities. The computer-related entities may be hardware, firmware, combinations of hardware and software, software, or software in running. For example, a component may be, but is not limited to, a process that runs on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and according to, for example, a signal having one or more data packets (for example, data from one component, where the component interacts with another component in a local system or a distributed system, and/or interacts with other systems via a network such as the Internet by using a signal).

Moreover, aspects are described in this application with reference to a wireless network device, the wireless network device may be a base station, and the base station may be configured to communicate with one or more user equipments, or may be configured to communicate with one or more base stations (for example, communicate with a macro base station and a micro base station such as an access point) that have some functions of user equipment. The wireless network device may further be user equipment, and the user equipment may be configured to communicate with (for example, be in D2D communication with) one or more user equipments, or may be configured to communicate with one or more base stations. User equipment may be further referred to as a user terminal, and may include some or all of functions of a system, a user unit, a user station, a mobile station, a mobile wireless terminal, a mobile device, a node, a device, a remote station, a remote terminal, a terminal, a wireless communications device, a wireless communications apparatus, or a user agent. The user equipment may be a cellular phone, a cordless telephone set, a session initiation protocol (English full name: Session Initiation Protocol, SIP for short)phone, a smartphone, a wireless local loop (English full name: wireless local loop, WLL for short)station, a personal digital assistant (English full name: personal digital assistant, PDA for short), a laptop computer, a handheld communications device, a handheld computing device, a satellite radio device, a wireless modem card, and/or another processing device configured to communicate on a wireless system. The base station may further be referred to as an access point, a node, a node B, an evolved NodeB (eNB), or another network entity, and may include some or all of functions of the foregoing network entity. The base station may communicate with a wireless terminal by using an air interface. The communication may be performed by using one or more sectors. The base station may serve as a router between a wireless terminal and a remaining part of an access network by converting a received frame of the air interface into an IP packet, where the access network includes an Internet Protocol (English full name: Internet Protocol, IP for short) network. The base station may further coordinate management of an attribute of the air interface, and may further be a gateway between a wired network and a wireless network.

All aspects, embodiments, or features are presented in this application by describing a system that may include multiple devices, components, modules, and the like. It should be appreciated and understood that, each system may include another device, component, module, and the like, and/or may not include all devices, components, modules, and the like discussed with reference to the accompany drawings. In addition, a combination of these solutions may be used.

In addition, the word "example" in the embodiments of the present invention is used to represent giving an example, an illustration, or a description. Any embodiment or design scheme described as an "example" in this application should not be explained as being more preferred or having more advantages than another embodiment or design scheme. Exactly, "for example" is used to present a concept in a specific manner.

In the embodiments of the present invention, one of information (information), signal (signal), message (message), or channel (channel) may be used sometimes. It should be noted that expressed meanings are consistent when differences are not emphasized. One of "of (of)", "corresponding (corresponding, relevant)", or "corresponding (corresponding)" may be used sometimes, and it should be noted that, if a difference among "of (of)", "corresponding (corresponding, relevant)", and "corresponding (corresponding)" is not emphasized, meanings expressed by "of (of)", "corresponding (corresponding, relevant)", and "corresponding (corresponding)" are consistent.

A network architecture and a service scenario that are described in the embodiments of the present invention are intended to describe the technical solutions in the embodiments of the present invention more clearly, and do not constitute any limitation to the technical solutions provided in the embodiments of the present invention. A person of ordinary skill in the art may learn that with evolution of network architectures and appearance of new service scenarios, the technical solutions provided in the embodiments of the present invention are also applicable to similar technical problems.

The embodiments of the present invention may be applied to a time division duplexing (time division duplexing, TDD) scenario, and may also be applicable to a frequency division duplexing (frequency division duplexing, FDD) scenario.

The embodiments of the present invention are described in dependence on a 4G network scenario in a wireless communications network. It should be noted that, solutions in the embodiments of the present invention may further be applied to another wireless communications network, and a corresponding name may also be replaced with a name of a corresponding function in another wireless communications network.

To be compatible with a TTI of 1 ms and a short TTI, in the embodiments of the present invention, indications are performed by using different TTI lengths. A symbol number may be used as a unit of a TTI length. For example, a TTI of 1 ms is divided into two slots (English name: slot), each slot includes seven symbols (ordinary cyclic prefix) or six symbols (extended cyclic prefix). Therefore, a TTI length of the TTI of 1 ms has a symbol number of 12 or 14, and correspondingly, a TTI length of a short TTI may have a symbol number of two, seven, or the like. A time length may also be used as a unit of a TTI length. For example, the TTI length of the TTI of 1 ms may be 1 ms, and the TTI length of the short TTI may be 0.1 ms, 0.5 ms, or the like.

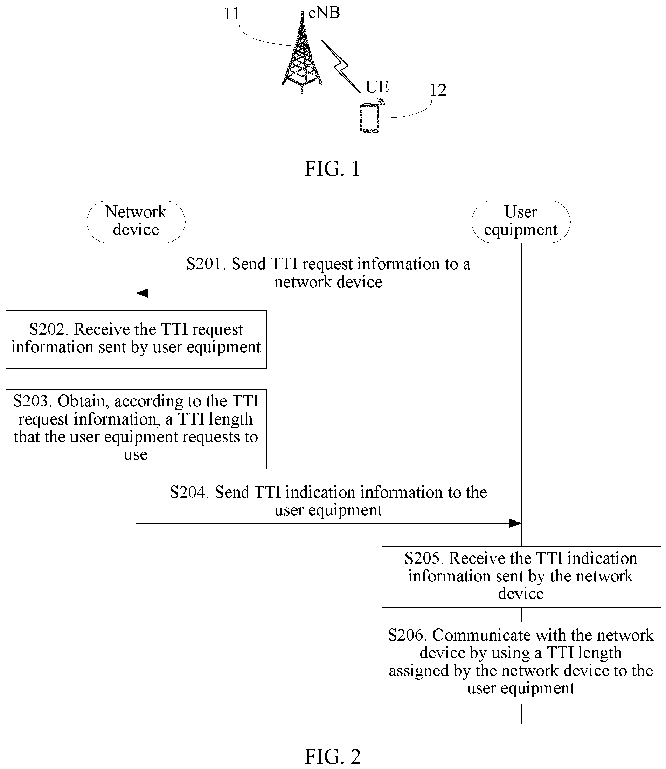

Referring to FIG. 1, FIG. 1 is a schematic structural diagram of a TTI configuration system according to an embodiment of the present invention. The TTI configuration system includes: a network device and user equipment, where the network device is described by using an eNB 11 as an example, and the user equipment is described by using UE 12 as an example. The UE 12 applies to the eNB 11 for use of a TTI resource, and the eNB 11 notifies the UE 12 of the TTI resource assigned to the UE 12.

An embodiment of the present invention provides a TTI configuration method, and referring to FIG. 2, the method includes the following steps.

S201. User equipment sends TTI request information to a network device, so that the network device obtains, according to the TTI request information, a TTI length that the user equipment requests to use, where the TTI request information indicates the TTI length that the user equipment requests to use.

The user equipment sends the TTI request information to the network device to request to use short TTIs of one or more TTI lengths. For a system supporting a plurality of short TTI lengths, a needed TTI length may be indicated in a request message; and for a system supporting only one short TTI length, the TTI request information may also be only a request message, to directly indicate requesting a short TTI supported by the system. Moreover, it is required that the user equipment needs to have a corresponding short TTI communication capability.

S202. The network device receives the TTI request information sent by the user equipment, where the TTI request information indicates the TTI length that the user equipment requests to use.

S203. The network device obtains, according to the TTI request information, the TTI length that the user equipment requests to use.

Optionally, step S203 specifically includes the following step.

S203a. The network device may obtain, according to information content of the TTI request information, the TTI length that the user equipment requests to use, where the information content of the TTI request information corresponds to the TTI length that the user equipment requests to use; or

S203b. The network device may obtain, according to a resource occupied by the TTI request information, the TTI length that the user equipment requests to use, where the resource occupied by the TTI request information corresponds to the TTI length that the user equipment requests to use.

S204. The network device sends TTI indication information to the user equipment, where the TTI indication information includes at least one of the following information: a TTI length assigned by the network device to the user equipment, effective moment information, start symbol location information, and enabling confirm information of the TTI length.

The network device finally determines, for one or more TTI lengths that the user equipment requests to use, and according to whether the network device supports a corresponding TTI length, and usage of each TTI length in a current wireless network, a TTI length assigned to the user equipment, and sends the assigned TTI length and enabling confirm information of the TTI length to the user equipment by using the TTI indication information. Additionally, the network device determines, according to usage of a time-frequency resource, effective moment information and start symbol location information of communication performed by the user equipment by using the assigned TTI length, and sends the information to the user equipment by using the TTI indication information likewise.

S205. The user equipment receives the TTI indication information sent by the network device.

S206. The user equipment communicates with the network device at an effective moment and/or a start symbol location by using the TTI length assigned by the network device to the user equipment.

According to the TTI configuration method provided in this embodiment of the present invention, the user equipment sends the TTI request information to the network device, where the TTI request information indicates the TTI length that the user equipment requests to use; the network device receives the TTI request information sent by the user equipment; the network device obtains, according to the TTI request information, the TTI length that the user equipment requests to use; the network device sends the TTI indication information to the user equipment, where the TTI indication information includes at least one of the following information: a TTI length assigned by the network device to the user equipment, effective moment information, start symbol location information, and enabling confirm information of the TTI length; and the user equipment communicates with the network device by using the TTI length assigned by the network device to the user equipment and/or an effective moment and/or a start symbol location. The user equipment requests from the network device to use a TTI length, where the TTI length includes a short TTI, and the network device assigns a corresponding TTI length for the request of the user equipment, so as to resolve a problem that there is no method for configuring a short TTI.

The TTI configuration method is described below with reference to a specific application scenario.

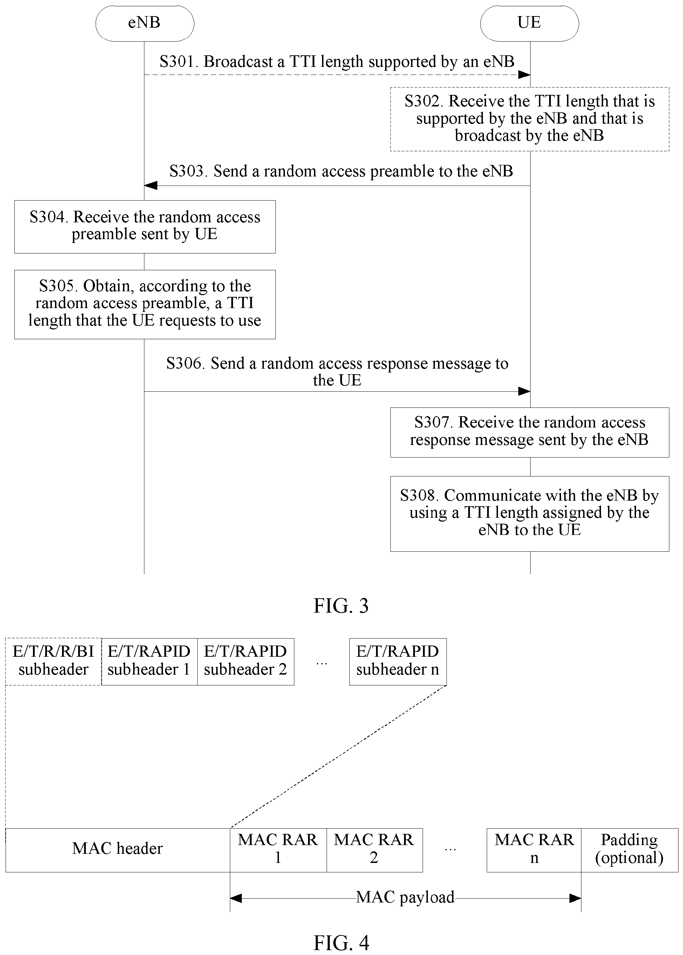

In a possible implementation, a TTI is configured by using a random access preamble in a random access process, and referring to FIG. 3, the configuration includes the following steps.

S301. An eNB broadcasts a TTI length supported by the eNB.

S302. UE receives the TTI length that is supported by the eNB and that is broadcast by the eNB.

Step S301 and step S302 are used by the UE to send, in the following steps, TTI request information according to the TTI length supported the eNB and a TTI length supported by the UE, so as to improve a success rate of communicating with the eNB by using a corresponding TTI length. Certainly, steps S301 and S302 are optional steps.

S303. The UE sends a random access preamble to the eNB, where the random access preamble indicates a TTI length that the UE requests to use.

There are totally 64 preambles available for a physical layer, and the preambles are divided into two parts: competitive access preambles and dedicated access preambles, where an information element numberOfRA-Preambles is used to indicate a quantity of competitive access preambles. If numberOfRA-Preambles is configured to be 64, it indicates that there is no dedicated access preamble, and all preambles are competitive access preambles. If numberOfRA-Preambles is configured to be less than 64, an index of the competitive access preambles is [0, numberOfRA-Preambles-1], and an index of the dedicated access preambles is [numberOfRA-Preambles, 63].

On the premise that numberOfRA-Preambles is configured to be less than 64, that is, on the premise that a dedicated access preamble exists, the dedicated access preamble is mapped by using a method as follows:
If a system supports only a TTI length, for example, supports only a TTI length of two symbols, an information element numberOfRA-Preambles-2symbolTTI may be defined to indicate mapping of a dedicated access preamble of the TTI length of two symbols, and a preamble located in a range [numberOfRA-Preambles, numberOfRA-Preambles+numberOfRA-Preambles-2symbolTTI-1] is dedicated to indication of the TTI length of two symbols. When the UE selects a preamble in this range and sends the preamble, it indicates that the UE intends to use a TTI of a length of two symbols in a subsequent transmission process. If the system supports a plurality of TTI lengths, a plurality of lengths may be added to perform indication. For example, an information element numberOfRA-Preambles-1symbolTTI is defined to indicate mapping of a dedicated access preamble of a TTI length of one symbol, and numberOfRA-Preambles-7symbolTTI indicates mapping of a dedicated access preamble of a TTI length of seven symbols. Correspondingly, preamble ranges corresponding to TTIs of lengths may be in an ascending sequence. For example, a preamble in a range [numberOfRA-Preambles, numberOfRA-Preambles+numberOfRA-Preambles-1symbolTTI-1] is dedicated to indication of a TTI length of one symbol, and a preamble in a range [numberOfRA-Preambles+numberOfRA-Preambles-1symbolTTI, numberOfRA-Preambles+numberOfRA-Preambles-1symbolTTI+numberOfRA-Preambles-7symbo lTTI-1] is dedicated to indication of a TTI length of seven symbols. Certainly, arrangement may also be performed in another preconfigured sequence.

S304. The eNB receives the random access preamble sent by the UE.

S305. The eNB obtains, according to the random access preamble, the TTI length that the UE requests to use.

For a specific method in which the eNB performs mapping according to the random access preamble to obtain the TTI length that the UE requests to use, refer to step S303.

S306. The eNB sends a random access response message (English full name: random access response, RAR for short) to the UE, where the random access response message includes TTI indication information, and the TTI indication information includes at least one of the following information: a TTI length assigned by the eNB to the UE, effective moment information, start symbol location information, and enabling confirm information of the TTI length.

Optionally, step S306 may specifically include: sending, by the eNB, the random access response message to the UE, where the TTI indication information is indicated by adding a byte to the random access response message.

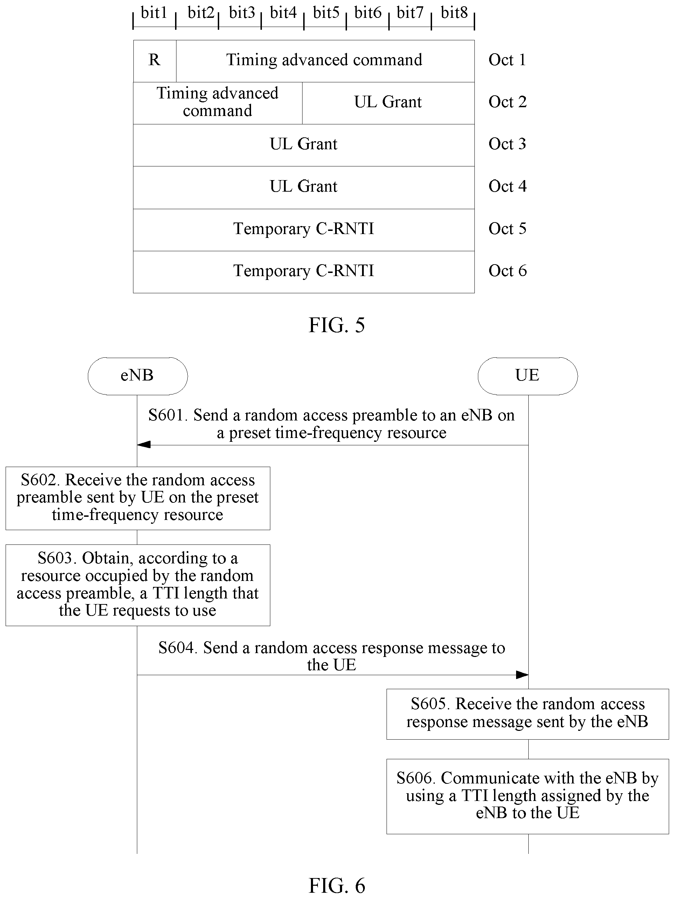

Specifically, referring to FIG. 4, FIG. 4 shows a structure of a MAC (English name: Media Access Control, Chinese name: Media Access Control) PDU (English name: protocol data unit, Chinese name: protocol data unit) of a random access response message. It may be learned from the foregoing that, a MAC PDU of the random access response message includes random access response messages of a plurality of UEs, and all these UEs send preambles on a same random access time-frequency resource. Referring to FIG. 5, in a random access response message of a single UE, a message header includes a preamble index (R in FIG. 5, RAPID for short), and a message body includes a timing advanced command (Timing Advanced Command (Chinese name: timing advanced command) in FIG. 5), an uplink scheduling grant (UL Grant (English name: uplink grant, Chinese name: uplink scheduling grant) in FIG. 5), and a temporary C-RNTI (Temporary C-RNTI in FIG. 5).

In a system supporting different TTI lengths, a related indication needs to be added to the random access response message, and the related indication may include, but is not limited to, TTI enabling information, a TTI length, and subframe start location information, where the subframe start location information includes a start subframe number and a symbol index in a subframe. For example, the TTI enabling information occupies 1 bit, the TTI length occupies 3 bits (for example, there are eight TTI lengths, and optionally, values 1 to 7 respectively correspond to TTIs of lengths of one to seven symbols), and the subframe start location information occupies 4 bits (optionally, used to indicate a start symbol location at which the UE begins to perform data transmission by using an assigned TTI length). Therefore, compared with a random access response message of a TTI of 1 ms in the prior art, there is totally one more byte.

For a method for configuring a TTI according to mapping between a dedicated access preamble and different TTI lengths, UE of a regular TTI of 1 ms and UE of a short TTI may send preambles on a same time-frequency resource. Therefore, in random access response messages, random access response messages of the two users may coexist. In a regular random access response message addressing mechanism, message bodies of users are all six bytes, and addressing needs to be performed according to only a length. However, if configuration of a short TTI exists, a length of a message body of the UE of the short TTI may be seven bytes. Therefore, to keep an addressing manner of the UE of the regular TTI of 1 ms unchanged, in the random access response messages, a random access response message of the UE of the regular TTI of 1 ms needs to be placed in front, and a random access response message of the UE of the short TTI needs to be placed behind. For the UE of the short TTI, which UEs are UEs of the regular TTI of 1 ms and which UEs are UEs of the short TTI are first identified by using RAPIDs. Then, in addressing of a random access response message, UE of the regular TTI of 1 ms performs addressing according to 6 bytes, and UE of the short TTI performs addressing according to 7 bytes.

Additionally, optionally, step S306 may specifically further include: sending, by the eNB, the random access response message to the UE, where the TTI indication information is indicated by reusing one or more optional bits of an uplink scheduling grant message in the random access response message.

Specifically, a data amount of a message body of the random access response message is not increased, but the TTI indication information is indicated by reusing other information bits. For example, an uplink scheduling grant message of 20 bits (a UL Grant in FIG. 5) includes the following messages:
1) hopping flag (English name: hopping flag)-occupying 1 bit
2) resource block assignment indication (English name: fixed size resource block assignment)-occupying 10 bits
3) modulation and demodulation scheme indication (English name: truncated modulation and coding scheme)-occupying 4 bits
4) power control indication (English name: TPC (English name: transmitter power control, Chinese name: transmission power control) command for scheduled PUSCH (English name: physical uplink shared channel, Chinese name: physical uplink shared channel))-occupying 3 bits
5) uplink delay sending indication (English name: UL (English name: uplink, Chinese name: uplink) delay)-occupying 1 bit; and
6) channel state information request indication (English name: CSI (English name: channel state information, Chinese name: channel state information) request)-occupying 1 bit.

In the foregoing information, 2), 3), and 4) are mandatory items, and 1), 5), and 6) are optional items. Therefore, information of 3 bits of 1), 5), and 6) may be reused, that is, a combination of these 3 bits is used as TTI indication information. Moreover, because a size of the message body of the random access response message is not changed, all users perform addressing according to 6 bytes, and the random access response message of the UE of the regular TTI of 1 ms does not need to be placed in front of the random access response message of the UE of the short TTI.

S307. The UE receives the random access response message sent by the eNB, where the random access response message includes the TTI indication information, and the TTI indication information includes at least one of the following information: a TTI length assigned by the eNB to the UE, effective moment information, start symbol location information, and enabling confirm information of the TTI length, where the subframe start location information includes a start subframe number and a symbol index in a subframe.

S308. The UE begins to communicate with the eNB at an effective moment and/or a start symbol location by using the TTI length assigned by the eNB to the UE.

According to the TTI configuration method provided in this embodiment of the present invention, in a random access process, the UE indicates, by using a random access preamble, a TTI length requested by the UE, and an eNB indicates, by using a random access response message, a TTI length assigned to the UE for the request, where the TTI length includes a short TTI, so as to resolve a problem that there is no method for configuring a short TTI.

In a possible implementation, a TTI is configured by using a resource occupied by a random access preamble in a random access process, and referring to FIG. 6, the configuration includes the following steps.

S601. UE sends a random access preamble to an eNB on a preset time-frequency resource, where the preset time-frequency resource corresponds to a TTI length that the UE requests to use.

In an LTE system, a random access time-frequency resource is determined according to the following two parameters: prach-ConfigIndex and prach-FrequencyOffset, where prach-ConfigIndex indicates a time domain frame number and a subframe number at which the random access resource is located, and prach-FrequencyOffset indicates a frequency domain RB (English name: resource block, Chinese name: resource block) start location of the random access resource in a subframe.

In a time domain distinguishing solution, different prach-ConfigIndexes may be configured for different TTI lengths, and the UE accesses the eNB by using different random access time domain resources, that is, it indicates that a corresponding TTI length is requested to be used. According to Table 5.7.1-2 in 3GPP TS36.211, two columns in Table 5.7.1-2: PRACH (English name: physical random access channel, Chinese name: physical random access channel) Configuration Index (Chinese name: PRACH configuration index) and Subframe number (Chinese name: subframe number) (for details, refer to Table 1) are mainly used, and different prach-ConfigIndexes (referring to PRACH Configuration Indexes in Table 1) indicate time domain locations of different random access resources. Therefore, time domain locations corresponding to different TTI lengths only need to be configured to not overlap. For example, when prach-ConfigIndex of a regular TTI length of 1 ms is configured to be 3, it indicates that a subframe index (referring to Subframe numbers in Table 1) at which a random access resource occurs is 1; when prach-ConfigIndex-1symbolTTI corresponding to a TTI of a length of 1 symbol is configured to be 4, it indicates that a subframe index at which a random access resource occurs is 4; and when prach-ConfigIndex-1symbolTTI corresponding to a TTI of a length of 7 symbols is configured to be 5, it indicates that a subframe index at which a random access resource occurs is 7, and the rest can be deduced by analogy.

**Table 1**

| PRACH Configuration Index | Preamble Format | System frame number | Subframe number | PRACH Configuration Index | Preamble Format | System frame number | Subframe number |
|---|---|---|---|---|---|---|---|
| 0 | 0 | Even | 1 | 32 | 2 | Even | 1 |
| 1 | 0 | Even | 4 | 33 | 2 | Even | 4 |
| 2 | 0 | Even | 7 | 34 | 2 | Even | 7 |
| 3 | 0 | Any | 1 | 35 | 2 | Any | 1 |
| 4 | 0 | Any | 4 | 36 | 2 | Any | 4 |
| 5 | 0 | Any | 7 | 37 | 2 | Any | 7 |
| 6 | 0 | Any | 1, 6 | 38 | 2 | Any | 1, 6 |
| 7 | 0 | Any | 2, 7 | 39 | 2 | Any | 2, 7 |
| 8 | 0 | Any | 3, 8 | 40 | 2 | Any | 3, 8 |
| 9 | 0 | Any | 1, 4, 7 | 41 | 2 | Any | 1, 4, 7 |
| 10 | 0 | Any | 2, 5, 8 | 42 | 2 | Any | 2, 5, 8 |
| 11 | 0 | Any | 3, 6, 9 | 43 | 2 | Any | 3, 6, 9 |
| 12 | 0 | Any | 0, 2, 4, 6, 8 | 44 | 2 | Any | 0, 2, 4, 6, 8 |
| 13 | 0 | Any | 1, 3, 5, 7, 9 | 45 | 2 | Any | 1, 3, 5, 7, 9 |
| 14 | 0 | Any | 0, 1, 2, 3, 4, 5, 6, 7, 8, 9 | 46 | N/A | N/A | N/A |
| 15 | 0 | Even | 9 | 47 | 2 | Even | 9 |
| 16 | 1 | Even | 1 | 48 | 3 | Even | 1 |
| 17 | 1 | Even | 4 | 49 | 3 | Even | 4 |
| 18 | 1 | Even | 7 | 50 | 3 | Even | 7 |
| 19 | 1 | Any | 1 | 51 | 3 | Any | 1 |
| 20 | 1 | Any | 4 | 52 | 3 | Any | 4 |
| 21 | 1 | Any | 7 | 53 | 3 | Any | 7 |
| 22 | 1 | Any | 1, 6 | 54 | 3 | Any | 1, 6 |
| 23 | 1 | Any | 2, 7 | 55 | 3 | Any | 2, 7 |
| 24 | 1 | Any | 3, 8 | 56 | 3 | Any | 3, 8 |
| 25 | 1 | Any | 1, 4, 7 | 57 | 3 | Any | 1, 4, 7 |
| 26 | 1 | Any | 2, 5, 8 | 58 | 3 | Any | 2, 5, 8 |
| 27 | 1 | Any | 3, 6, 9 | 59 | 3 | Any | 3, 6, 9 |
| 28 | 1 | Any | 0, 2, 4, 6, 8 | 60 | N/A | N/A | N/A |
| 29 | 1 | Any | 1, 3, 5, 7, 9 | 61 | N/A | N/A | N/A |
| 30 | N/A | N/A | N/A | 62 | N/A | N/A | N/A |
| 31 | 1 | Even | 9 | 63 | 3 | Even | 9 |

In the above table, PRACH Configuration Index indicates a PRACH configuration index; Preamble Format indicates a preamble format, and this parameter has totally five effective formats: 0, 1, 2, 3, and 4, or is N/A (English name: not applicable, Chinese name: not applicable); System frame number (Chinese name: system frame number) indicates a system frame number, where a parameter Even (Chinese name: even) indicates an even number, Any (Chinese name: any) indicates that odd and even numbers are both applicable, and N/A indicates not applicable; and Subframe number indicates a subframe number that has totally ten effective values: 0 to 9, or is N/A (not applicable).

In a frequency domain location distinguishing solution, different prach-FrequencyOffsets may be configured for different TTI lengths, and the UE accesses the eNB by using different random access frequency domain resources, that is, it indicates that a corresponding TTI length is requested to be used. Because each random access resource fixedly occupies six RBs, an interval of prach-FrequencyOffsets corresponding to different TTI lengths needs to be greater than six RBs. For example, in a case of a bandwidth of 20 M, a total quantity of RBs is 100, different prach-FrequencyOffsets for different TTI lengths of a regular TTI length may be configured to be 50, prach-FrequencyOffset-1symbolTTI corresponding to a TTI of a length of 1 symbol may be configured to be 56, and prach-FrequencyOffset-7symbolTTI corresponding to a TTI of a length of 7 symbols may be configured to be 62.

S602. The eNB receives the random access preamble sent by the UE on the preset time-frequency resource, where the preset time-frequency resource corresponds to the TTI length that the UE requests to use.

S603. The eNB obtains, according to the preset time-frequency resource occupied by the random access preamble, the TTI length that the UE requests to use, where the resource occupied by the random access preamble corresponds to the TTI length that the UE requests to use.

For a specific method for obtaining, according to the resource occupied by the random access preamble, the TTI length that the UE requests to use, refer to step S601.

S604. The eNB sends a random access response message to the UE, where the random access response message includes TTI indication information, and the TTI indication information includes at least one of the following information: a TTI length assigned by the eNB to the UE, effective moment information, start symbol location information, and enabling confirm information of the TTI length.

S605. The UE receives the random access response message sent by the eNB, where the random access response message includes the TTI indication information.

After a dedicated time-frequency resource is used, UEs sending a preamble on a same time-frequency resource all intend to use a TTI of a same length. Therefore, message bodies of the UEs in random access response messages all have a same length, and no addressing problem exists again.

S606. The UE begins to communicate with the eNB at an effective moment and/or a start symbol location by using the TTI length assigned by the eNB to the UE.

A person skilled in the art may understand that, the foregoing plurality of methods for configuring a TTI in the random access process may be combined, that is, dedicated time-frequency resources are first assigned for a short TTI, and all users applying for short TTI configuration are designated, by using prach-ConfigIndex-shortTTI or prach-FrequencyOffset-shortTTI, to send preambles on these resources. Moreover, in these dedicated time-frequency resources, because compatibility with UE of the regular TTI length of 1 ms is not considered again, all 64 preambles may be grouped, and there are more preambles available for each TTI length.

According to the TTI configuration method provided in this embodiment of the present invention, in a random access process, the UE indicates, by using a resource occupied by a random access preamble, a TTI length requested by the UE, and the eNB indicates, by using a random access response message, a TTI length assigned to the UE for the request, where the TTI length includes a short TTI, so as to resolve a problem that there is no method for configuring a short TTI.

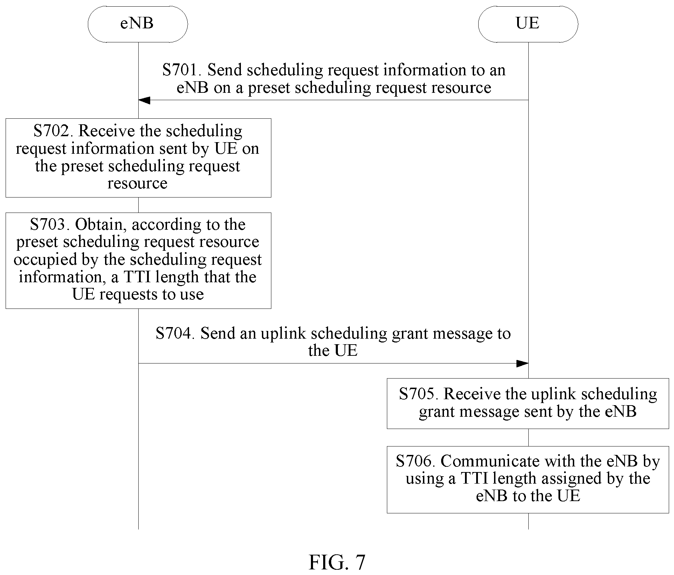

In another possible implementation, a TTI is configured in a UE scheduling request (English full name: scheduling request, SR for short) process, and referring to FIG. 7, the configuration includes the following steps.

S701. UE sends scheduling request information to an eNB on a preset scheduling request resource, where the preset scheduling request resource corresponds to a TTI length that the UE requests to use.

An SR resource is configured by an information element SchedulingRequestConfig in a system RRC (English name: Radio Resource Control, Chinese name: Radio Resource Control Protocol) connection setup message, where the information element SchedulingRequestConfig includes two values: sr-ConfigIndex and sr-PUCCH-ResourceIndex. sr-ConfigIndex indicates a period and a subframe location of the SR resource, and sr-PUCCH-ResourceIndex indicates an SR resource index number in a subframe. On this basis, different sr-ConfigIndexes and/or different sr-PUCCH-ResourceIndexes may be designated for different TTI lengths. A user sends an SR to the eNB by using a dedicated SR resource, and it indicates that the user intends to use a TTI of a corresponding length.

S702. The eNB receives the scheduling request information sent by the UE on the preset scheduling request resource, where the preset scheduling request resource corresponds to the TTI length that the UE requests to use.

S703. The eNB obtains, according to the preset scheduling request resource occupied by the scheduling request information, the TTI length that the UE requests to use, where the preset scheduling request resource occupied by the scheduling request information corresponds to the TTI length that the UE requests to use.

For a specific method for obtaining, according to the preset scheduling request resource occupied by the scheduling request information, the TTI length that the UE requests to use, refer to step S701.

S704. The eNB sends an uplink scheduling grant message to the UE, where the uplink scheduling grant message includes TTI indication information, and the TTI indication information includes at least one of the following information: a TTI length assigned by the eNB to the UE, effective moment information, start symbol location information, and enabling confirm information of the TTI length.

S705. The UE receives the uplink scheduling grant message sent by the eNB, where the uplink scheduling grant message includes the TTI indication information.

S706. The UE begins to communicate with the eNB at an effective moment and/or a start symbol location by using the TTI length assigned by the eNB to the UE.

According to the TTI configuration method provided in this embodiment of the present invention, in a scheduling request process, the UE indicates, by using a preset scheduling request resource occupied by scheduling request information, a TTI length requested by the UE, and the eNB indicates, by using an uplink scheduling grant message, a TTI length assigned to the UE for the request, where the TTI length includes a short TTI, so as to resolve a problem that there is no method for configuring a short TTI.

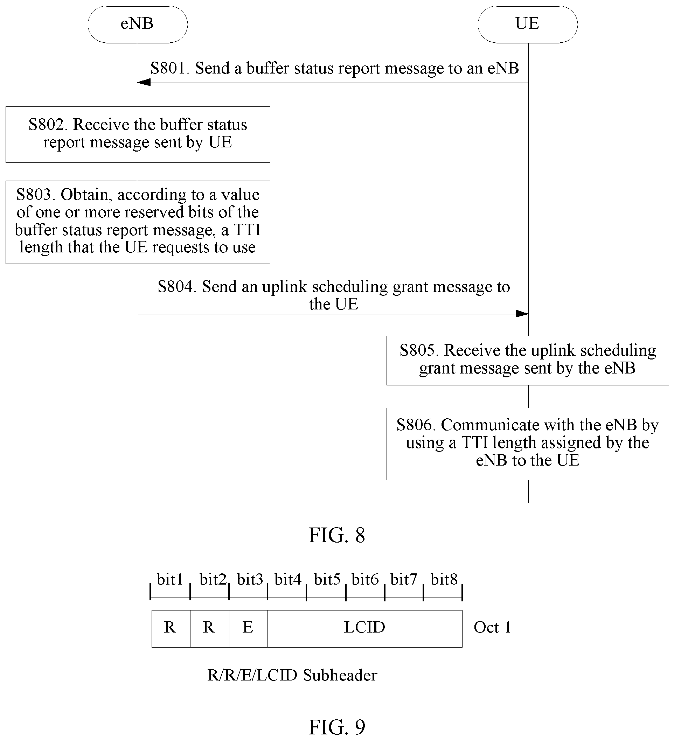

In another possible implementation, a TTI is configured in a UE buffer status report (English full name: buffer status report, BSR for short) process, and referring to FIG. 8, the configuration includes the following steps.

S801. UE sends a buffer status report message to an eNB, where a value of one or more reserved bits of the buffer status report message indicates a TTI length that the UE requests to use.

Specifically, the UE sends a BSR to the eNB, to indicate how much data in a current buffer of the UE needs to be sent, and the eNB sends an uplink scheduling grant to the UE accordingly. Referring to FIG. 9, FIG. 9 shows a message header of a BSR. One or more reserved bits (R in FIG. 9) of the message header of the BSR may be set to 1, to indicate that the current BSR message includes a TTI use request, and moreover, an indication of a TTI length intended to be used may be added to a message body of the BSR.

S802. The eNB receives the buffer status report message sent by the UE, where the value of the one or more reserved bits of the buffer status report message indicates the TTI length that the UE requests to use.

S803. The eNB obtains, according to the value of the one or more reserved bits of the buffer status report message, the TTI length that the UE requests to use, where the value of the one or more reserved bits of the buffer status report message corresponds to the TTI length that the UE requests to use. For a specific method, refer to step S801.

S804. The eNB sends an uplink scheduling grant message to the UE, where the uplink scheduling grant message includes TTI indication information, and the TTI indication information includes at least one of the following information: a TTI length assigned by the eNB to the UE, effective moment information, start symbol location information, and enabling confirm information of the TTI length.

S805. The UE receives the uplink scheduling grant message sent by the eNB, where the uplink scheduling grant message includes the TTI indication information.

S806. The UE begins to communicate with the eNB at an effective moment and/or a start symbol location by using the TTI length assigned by the eNB to the UE.

According to the TTI configuration method provided in this embodiment of the present invention, in a buffer status report process, the UE indicates, by using a value of one or more reserved bits of a buffer status report message, a TTI length requested by the UE, and the eNB indicates, by using an uplink scheduling grant message, a TTI length assigned to the UE for the request, where the TTI length includes a short TTI, so as to resolve a problem that there is no method for configuring a short TTI.

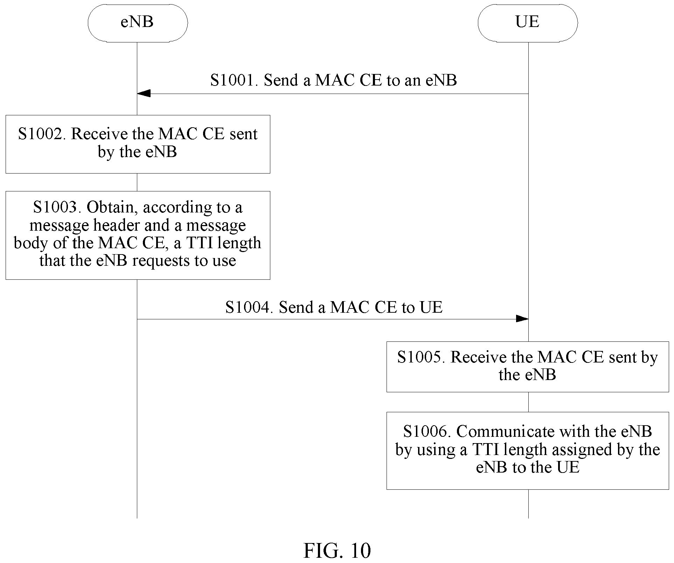

In still another possible implementation, a MAC CE to which a BSR message belongs is extended to configure a TTI, and referring to FIG. 10, the configuration includes the following steps.

S1001. UE sends a MAC CE (English name: control element, Chinese name: control element) to an eNB, where an uplink idle LCID value in a message header of the MAC CE indicates that a type of the MAC CE is TTI request information, and a message body of the MAC CE indicates the requested TTI length.

Specifically, the BSR is one type of MAC CE, and may be further extended, that is, a new MAC CE is designed and sent by the UE to the eNB, to indicate the TTI request information. The MAC CE includes a message header and a message body. A format of the message header is a regular MAC CE header format, and only a different value needs to be used for an LCID (English name: logical channel identify, Chinese name: logical channel identifier) in the format to indicate that a type of the MAC CE is the TTI request information. According to the description of section 6.2 of 3GPP TS36.321, a current range of uplink idle LCID values is from 01100 to 10101, and any one of the value may be selected from this range. The message body of the MAC CE includes specific content of the TTI request information, and for example, indicates the requested TTI length.

S1002. The eNB receives the MAC CE sent by the UE, where the uplink idle LCID value in the message header of the MAC CE indicates that the type of the MAC CE is the TTI request information, and the message body of the MAC CE indicates the requested TTI length.

S1003. The eNB obtains, according to the message header and the message body of the MAC CE, the TTI length that the UE requests to use. For a specific manner, refer to step S1001.

S1004. The eNB sends a MAC CE to the UE, where a downlink idle LCID in a message header of the MAC CE indicates that a type of the MAC CE is TTI indication information, and a message body of the MAC CE includes at least one of the following information: a TTI length assigned by the eNB to the UE, effective moment information, start symbol location information, and enabling confirm information of the TTI length, where the subframe start location information includes a start subframe number and a symbol index in a subframe.

Specifically, the eNB sends the MAC CE to the UE, a current range of downlink idle LCID values in the message header of the MAC CE is from 01011 to 11001, and any one of the values may be selected from this range to indicate that the type of the MAC CE is the TTI indication information. The message body of the MAC CE includes a TTI length assigned by the eNB to the UE and possibly needed subframe start location information, where the subframe start location information includes a start subframe number and a symbol index in a subframe.

S1005. The UE receives the MAC CE sent by the eNB, where the downlink idle LCID in the message header of the MAC CE indicates that the type of the MAC CE is the TTI indication information, and the message body of the MAC CE includes at least one of the following information: a TTI length assigned by the eNB to the UE, effective moment information, start symbol location information, and enabling confirm information of the TTI length, where the subframe start location information includes a start subframe number and a symbol index in a subframe.

S1006. The UE begins to communicate with the eNB at an effective moment and/or a start symbol location by using the TTI length assigned by the eNB to the UE.

According to the TTI configuration method provided in this embodiment of the present invention, the UE indicates, by using a message header and a message body of a MAC CE, a TTI length requested by the UE, and the eNB indicates, by using the MAC CE, a TTI length assigned to the UE for the request, where the TTI length includes a short TTI, so as to resolve a problem that there is no method for configuring a short TTI.

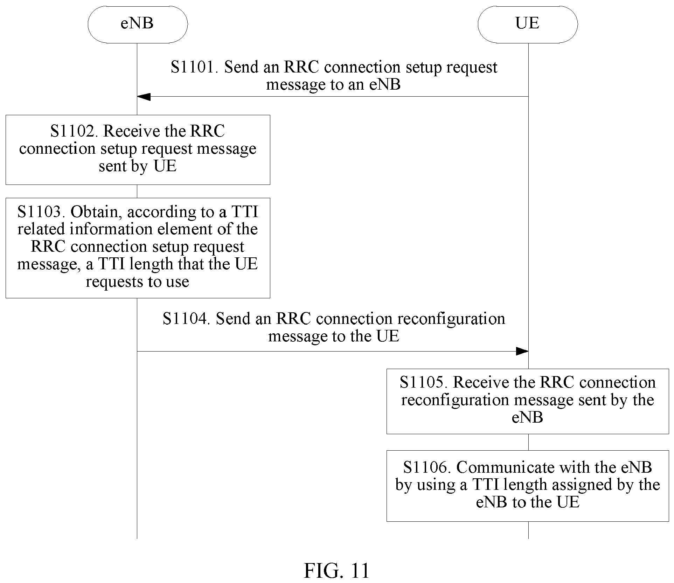

In still another possible implementation, a TTI is configured in an RRC connection setup process, and referring to FIG. 11, the configuration includes the following steps.

S1101. UE sends an RRC connection setup request message to an eNB, where a TTI related information element of the RRC connection setup request message indicates a TTI length that the UE requests to use.

Specifically, in an uplink direction, the UE may add a TTI request information related information element to the RRC connection setup request, and the TTI request information related information element includes a TTI length intended to be used.

S1102. The eNB receives the RRC connection setup request message sent by the UE, where the TTI related information element of the RRC connection setup request message indicates the TTI length that the UE requests to use.

S1103. The eNB obtains, according to the TTI related information element of the RRC connection setup request message, the TTI length that the UE requests to use, where the TTI related information element of the RRC connection setup request message corresponds to the TTI length that the UE requests to use. For a specific method, refer to step S1101.

S1104. Send an RRC connection reconfiguration message to the UE, where the RRC connection reconfiguration message includes TTI indication information, the TTI indication information includes a TTI length assigned by the eNB to the UE, and specifically, the TTI indication information includes at least one of the following information: a TTI length assigned by the eNB to the UE, effective moment information, start symbol location information, and enabling confirm information of the TTI length, where the subframe start location information includes a start subframe number and a symbol index in a subframe.

Specifically, in a downlink direction, the eNB may add a TTI indication information related information element to the RRC connection reconfiguration message, and the TTI indication information related information element includes the TTI length assigned to the UE and/or the subframe start location information, where the subframe start location information includes a start subframe number and a symbol index in a subframe.

S1105. The UE receives the RRC connection reconfiguration message sent by the eNB, where the RRC connection reconfiguration message includes the TTI indication information, the TTI indication information includes the TTI length assigned by the eNB to the UE, and specifically, the TTI indication information includes at least one of the following information: a TTI length assigned by the eNB to the UE, effective moment information, start symbol location information, and enabling confirm information of the TTI length, where the subframe start location information includes a start subframe number and a symbol index in a subframe.

S1106. The UE begins to communicate with the eNB at an effective moment and/or a start symbol location by using the TTI length assigned by the eNB to the UE.

According to the TTI configuration method provided in this embodiment of the present invention, in an RRC connection setup process, the UE indicates, by using a TTI related information element of an RRC connection setup request message, a TTI length requested by the UE, and the eNB indicates, by using an RRC connection reconfiguration message, a TTI length assigned to the UE for the request, where the TTI length includes a short TTI, so as to resolve a problem that there is no method for configuring a short TTI.

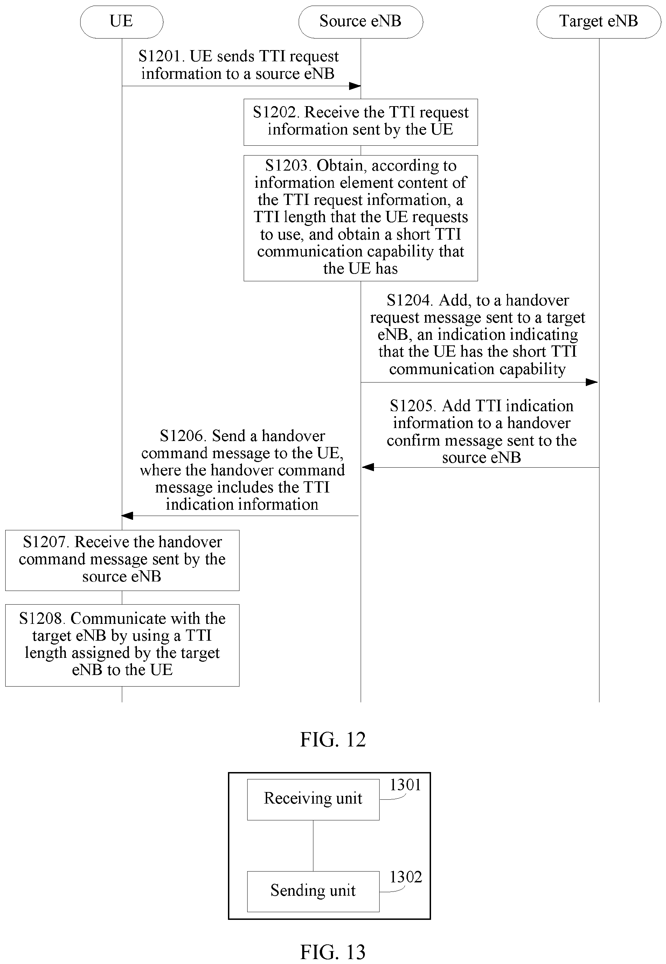

In yet another possible implementation, a TTI is configured in a handover preparation stage, and referring to FIG. 12, the configuration includes the following steps.

S1201. UE sends TTI request information to a source eNB, so that the source eNB obtains, according to the TTI request information, a TTI length that the UE requests to use, where the TTI request information indicates the TTI length that the UE requests to use.

The UE sends the TTI request information to the source eNB to request to use one or more TTI lengths. Therefore, both a TTI of 1 ms and a short TTI may be included. Moreover, it is required that the UE needs to have a corresponding short TTI communication capability.

S1202. The source eNB receives the TTI request information sent by the UE, where the TTI request information indicates the TTI length that the UE requests to use.

S1203. The source eNB obtains, according to the TTI request information, the TTI length that the UE requests to use, and obtains a short TTI communication capability that the UE has.

In step S1201 to step S1203, the source eNB obtains, by using any TTI configuration method provided in the embodiments of the present invention, the TTI length that the UE requests to use. Because the UE sends the TTI request information according to a supporting capability of the UE, it is equivalent that the source eNB obtains the short TTI communication capability that the UE has.

S1204. The source eNB may add, to a handover request (English name: handover request) message sent to a target eNB, an indication indicating that the UE has the short TTI communication capability.

S1205. The target eNB adds TTI indication information to a handover confirm (English name: handover confirm) message sent to the source eNB, where the TTI indication information includes a TTI length assigned by the eNB to the UE, and specifically, the TTI indication information includes at least one of the following information: a TTI length assigned by the eNB to the UE, effective moment information, start symbol location information, and enabling confirm information of the TTI length, where the subframe start location information includes a start subframe number and a symbol index in a subframe.

If the target eNB accepts the handover request, a TTI length and possibly needed subframe start location information may be indicated to the source eNB in the handover confirm message.

S1206. The source eNB sends a handover command message (English name: handover command) to the UE, where the handover command message includes the TTI indication information, the TTI indication information includes the TTI length assigned by the eNB to the UE, and specifically, the TTI indication information includes at least one of the following information: a TTI length assigned by the eNB to the UE, effective moment information, start symbol location information, and enabling confirm information of the TTI length, where the subframe start location information includes a start subframe number and a symbol index in a subframe.

S1207. The UE receives the handover command message sent by the source eNB, where the handover command message includes the TTI indication information, and the TTI indication information includes at least one of the following information: a TTI length assigned by the eNB to the UE, effective moment information, start symbol location information, and enabling confirm information of the TTI length, where the subframe start location information includes a start subframe number and a symbol index in a subframe.

S1208. The UE begins to communicate with the target eNB at an effective moment and/or a start symbol location by using the TTI length assigned by the target eNB to the UE.

According to the TTI configuration method provided in this embodiment of the present invention, in a handover preparation stage, a source eNB may add, to a handover request message sent to a target eNB, an indication indicating that the UE has a short TTI communication capability, the target eNB adds TTI indication information to a handover confirm message sent to the source eNB, and the source eNB sends a handover command message to the UE, where the handover command message includes the TTI indication information, and the TTI indication information includes a TTI length assigned by the eNB to the UE, where the TTI length includes a short TTI, so as to resolve a problem that there is no method for configuring a short TTI.

An embodiment of the present invention provides a network device, configured to perform the foregoing TTI configuration method. Referring to FIG. 13, the network device includes:
a receiving unit 1301, configured to receive TTI request information sent by user equipment, where the TTI request information indicates a TTI length requested to be used; and
a sending unit 1302, configured to respond to the TTI request information received by the receiving unit 1301, and send TTI indication information to the user equipment, where the TTI indication information includes at least one of the following information:
a TTI length assigned by the network device to the user equipment, effective moment information, start symbol location information, and enabling confirm information of the TTI length.

Optionally, in a possible implementation, the sending unit 1302 is further configured to: before the receiving unit 1301 receives the TTI request information sent by the user equipment, broadcast a TTI length supported by the network device.

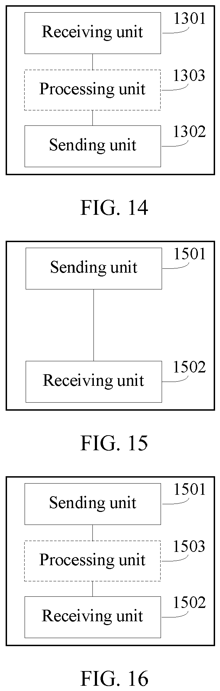

Optionally, referring to FIG. 14, the network device further includes:
a processing unit 1303, configured to obtain, according to information content of the TTI request information, the TTI length that the user equipment requests to use, where the information content of the TTI request information corresponds to the TTI length that the user equipment requests to use; or optionally
a processing unit 1303, configured to obtain, according to a resource occupied by the TTI request information sent by the user equipment, the TTI length that the user equipment requests to use, where the occupied resource corresponds to the TTI length that the user equipment requests to use.

Optionally, in a possible implementation, the receiving unit 1301 is further configured to receive a random access preamble sent by the user equipment, where the random access preamble indicates the TTI length that the user equipment requests to use;
the processing unit 1303 is further configured to obtain, according to the random access preamble, the TTI length that the user equipment requests to use; and
the sending unit 1302 is further configured to send a random access response message to the user equipment, where the TTI indication information is indicated in the random access response message.

Optionally, in a possible implementation, the sending unit 1302 is further configured to:
indicate the TTI indication information by adding a byte to the random access response message; or
indicate the TTI indication information by reusing one or more optional bits of an uplink scheduling grant message in the random access response message.

Optionally, in a possible implementation,
the receiving unit 1301 is further configured to receive a random access preamble sent by the user equipment on a preset time-frequency resource, where the preset time-frequency resource corresponds to the TTI length that the user equipment requests to use;
the processing unit 1303 is further configured to obtain, according to the preset time-frequency resource occupied by the random access preamble, the TTI length requested to be used; and
the sending unit 1302 is further configured to send a random access response message to the user equipment, where the random access response message includes the TTI indication information.

Optionally, in a possible implementation,
the receiving unit 1301 is further configured to receive scheduling request information sent by the user equipment on a preset scheduling request resource, where the preset scheduling request resource corresponds to the TTI length that the user equipment requests to use; and
the processing unit 1303 is further configured to obtain, according to a preset time-frequency resource occupied by the scheduling request information sent by the user equipment, the TTI length that the user equipment requests to use.

Optionally, in a possible implementation,
the receiving unit 1301 is further configured to receive a buffer status report message sent by the user equipment, where a value of one or more reserved bits of the buffer status report message indicates the TTI length that the user equipment requests to use; and
the processing unit 1303 is further configured to obtain, according to the value of the one or more reserved bits of the buffer status report message, the TTI length that the user equipment requests to use.

Optionally, in a possible implementation,
the receiving unit 1301 is further configured to receive a MAC CE, where an uplink LCID value in a message header of the MAC CE indicates that a type of the MAC CE is TTI request information, and a message body of the MAC CE indicates the TTI length requested by the user equipment;
the processing unit 1303 is further configured to obtain, according to the message header and the message body of the MAC CE, the TTI length that the user equipment requests to use; and
the sending unit 1302 is further configured to send a MAC CE to the user equipment, where a downlink LCID value in a message header of the MAC CE indicates that a type of the MAC CE is TTI indication information, and a message body of the MAC CE includes the TTI indication information.

Optionally, in a possible implementation,
the receiving unit 1301 is further configured to receive an RRC connection setup request message sent by the user equipment, where a TTI related information element of the RRC connection setup request message indicates the TTI length that the user equipment requests to use;
the processing unit 1303 is further configured to obtain, according to the TTI related information element of the RRC connection setup request message, the TTI length that the user equipment requests to use; and
the sending unit 1302 is further configured to send an RRC connection setup message or an RRC reconfiguration message to the user equipment, where the RRC connection setup message or the RRC reconfiguration message includes the TTI indication information.

Optionally, in a possible implementation,
the sending unit 1302 is further configured to send a handover command message to the user equipment, where the handover command message includes the TTI indication information.

It should be noted that, in this embodiment, the sending unit 1302 may be an interface circuit that has a sending function on an eNB, such as a transmitter or an information sending interface; and the receiving unit 1301 may be an interface circuit that has a receiving function on the eNB, such as a receiver or an information receiving interface. The processing unit 1303 may be an independently disposed processor, may be integrated in a processor of the eNB, or may be stored in a memory of the eNB in a form of program code, and a processor of the eNB invokes the program code and performs a function of the processing unit 1303. The processor herein may be a central processing unit (English full name: central processing unit, CPU for short) or an application-specific integrated circuit (English full name: application-specific integrated circuit, ASIC for short), or may be one or more integrated circuits configured to implement this embodiment of the present invention.

The network device in this embodiment of the present invention may be configured to perform the foregoing method process. Therefore, for a technical effect that can be achieved, also refer to the foregoing method embodiment. Details are not described herein again in this embodiment of the present invention.

An embodiment of the present invention provides user equipment, configured to perform the foregoing TTI configuration method. Referring to FIG. 15, the user equipment includes:
a sending unit 1501, configured to send TTI request information to a network device, where the TTI request information indicates a TTI length that the user equipment requests to use; and
a receiving unit 1502, configured to receive TTI indication information sent by the network device, where the TTI indication information includes at least one of the following information:
   a TTI length assigned to the user equipment, effective moment information, start symbol location information, and enabling confirm information of the TTI length.

Optionally, in a possible implementation,
the receiving unit 1502 is further configured to: before the sending unit 1501 sends the TTI request information, receive a TTI length supported by the network device.

Optionally, referring to FIG. 16, the user equipment further includes:
a processing unit 1503, configured to indicate, by using information content of the TTI request information, the TTI length that the user equipment requests to use, where the information content of the TTI request information corresponds to the TTI length that the user equipment requests to use; or optionally
a processing unit 1503, configured to indicate, by using a resource occupied by the TTI request information, the TTI length that the user equipment requests to use, where the occupied resource corresponds to the TTI length that the user equipment requests to use.

Optionally, in a possible implementation,
the sending unit 1501 is further configured to send a random access preamble to the network device, where the random access preamble indicates the TTI length that the user equipment requests to use; and
the receiving unit 1502 is further configured to receive a random access response message sent by the network device, where the TTI indication information is indicated in the random access response message.

Optionally, in a possible implementation, the processing unit 1503 is further configured to:
indicate the TTI indication information by adding a byte to the random access response message; or
indicate the TTI indication information by reusing one or more optional bits of an uplink scheduling grant message in the random access response message.

Optionally, in a possible implementation,
the sending unit 1501 is further configured to send a random access preamble to the network device on a preset time-frequency resource, where the preset time-frequency resource corresponds to the TTI length that the user equipment requests to use; and
the receiving unit 1502 is further configured to receive a random access response message sent by the network device, where the random access response message includes the TTI indication information.

Optionally, in a possible implementation,
the sending unit 1501 is further configured to send scheduling request information to the network device on a preset scheduling request resource, where the preset scheduling request resource corresponds to the TTI length that the user equipment requests to use.

Optionally, in a possible implementation,
the sending unit 1501 is further configured to send a buffer status report message to the network device, where a value of one or more reserved bits of the buffer status report message indicates the TTI length that the user equipment requests to use.

Optionally, in a possible implementation,
the sending unit 1501 is further configured to send a MAC CE to the network device, where an uplink LCID value in a message header of the MAC CE indicates that a type of the MAC CE is TTI request information, and a message body of the MAC CE indicates the requested TTI length; and
the receiving unit 1502 is further configured to receive a MAC CE sent by the network device, where a downlink LCID value in a message header of the MAC CE indicates that a type of the MAC CE is TTI indication information, and a message body of the MAC CE includes the TTI indication information.

Optionally, in a possible implementation,
the sending unit 1501 is further configured to send an RRC connection setup request message to the network device, where a TTI related information element of the RRC connection setup request message indicates the TTI length that the user equipment requests to use; and
the receiving unit 1502 is further configured to receive an RRC connection setup message or an RRC reconfiguration message sent by the network device, where the RRC connection setup message or the RRC reconfiguration message includes the TTI indication information.

Optionally, in a possible implementation,
the receiving unit 1502 is further configured to receive a handover command message sent by the network device, where the handover command message includes the TTI indication information.

It should be noted that, in this embodiment, the sending unit 1501 may be an interface circuit that has a sending function on the UE, such as a transmitter or an information sending interface; and the receiving unit 1502 may be an interface circuit that has a receiving function on the UE, such as a receiver or an information receiving interface. The processing unit 1503 may be an independently disposed processor, may be integrated in a processor of the UE, or may be stored in a memory of the UE in a form of program code, and a processor of the UE invokes the program code and performs a function of the processing unit 1503. The processor herein may be a central processing unit (English full name: central processing unit, CPU for short) or an application-specific integrated circuit (English full name: application-specific integrated circuit, ASIC for short), or may be one or more integrated circuits configured to implement this embodiment of the present invention.

The user equipment in this embodiment of the present invention may be configured to perform the foregoing method process. Therefore, for a technical effect that can be achieved, also refer to the foregoing method embodiment. Details are not described herein again in this embodiment of the present invention.

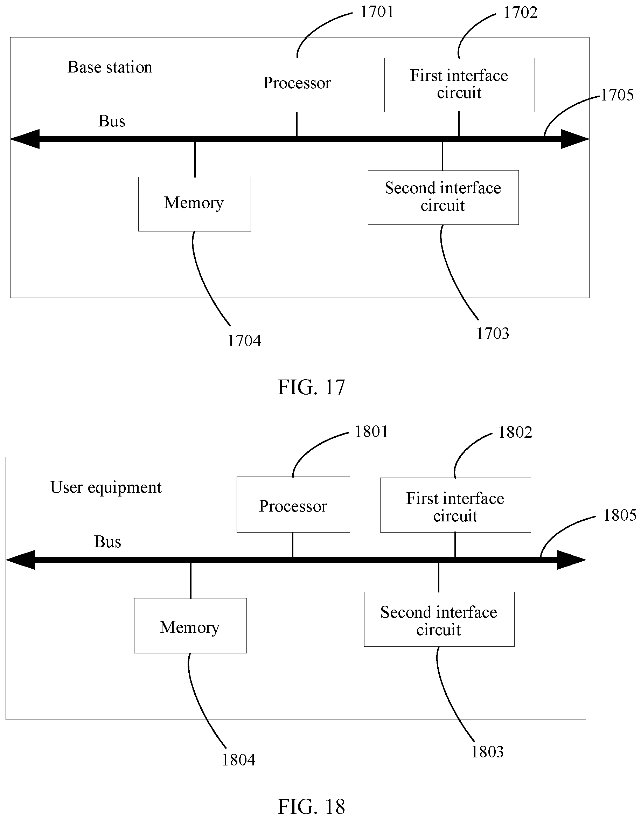

Referring to FIG. 17, an embodiment of the present invention provides a network device, configured to implement the foregoing TTI configuration method. The apparatus may be an eNB, and may include a processor 1701, a first interface circuit 1702, a second interface circuit 1703, a memory 1704, and a bus 1705. The processor 1701, the first interface circuit 1702, the second interface circuit 1703, and the memory 1704 are connected by using the bus 1705 and communicate with each other.

It should be noted that the processor 1701 herein may be one processor, or may be a general term of a plurality of processing elements. For example, the processor may be a central processing unit CPU, may be an application-specific integrated circuit ASIC, or may be one or more integrated circuits configured to implement this embodiment of the present invention, for example, one or more microprocessors (English full name: digital signal processor, DSP for short), or one or more field programmable gate arrays (English full name: field programmable gate array, FPGA for short).

The memory 1704 may be one storage apparatus, or may be a general term of a plurality of storage elements, and is configured to store executable program code, or parameters, data, and the like required for running of an access network management device. Moreover, the memory 1704 may include a random access memory (English full name: random-access memory, RAM for short), and may also include a non-volatile memory (English full name: non-volatile memory, NVRAM for short) such as a magnetic disk storage or a flash memory (Flash).

The bus 1705 may be an industry standard architecture (English full name: industry standard architecture, ISA for short) bus, a peripheral component interconnect (English full name: peripheral component, PCI for short) bus, an extended industry standard architecture (English full name: extended industry standard architecture, EISA for short) bus, or the like. The bus 1705 may be classified into an address bus, a data bus, a control bus, and the like. For convenience of representation, only one bold line is configured for representation in FIG. 17, but it does not indicate that there is only one bus or one type of bus.

The processor 1701 is configured to execute a program in the memory, so as to perform the method provided in the foregoing method embodiment with reference to the first interface circuit 1702 and the second interface circuit 1703.

Specifically, the processor 1701 is configured to execute a program in the memory to perform a function of the processing unit of the eNB in the foregoing embodiment.

The first interface circuit 1702 is configured to perform a function of the receiving unit of the eNB in the foregoing embodiment.

The second interface unit 1703 is configured to perform a function of the sending unit of the eNB in the foregoing embodiment.

The network device in this embodiment of the present invention may be configured to perform the foregoing method process. Therefore, for a technical effect that can be achieved, also refer to the foregoing method embodiment. Details are not described herein again in this embodiment of the present invention.

Referring to FIG. 18, an embodiment of the present invention provides user equipment, configured to implement the foregoing TTI configuration method. The apparatus may be an eNB, and may include: a processor 1801, a first interface circuit 1802, a second interface circuit 1803, a memory 1804, and a bus 1805. The processor 1801, the first interface circuit 1802, the second interface circuit 1803, and the memory 1804 are connected by using the bus 1805 and communicate with each other.

It should be noted that the processor 1801 herein may be one processor, or may be a general term of a plurality of processing elements. For example, the processor may be a central processing unit CPU, may be an application-specific integrated circuit ASIC, or may be one or more integrated circuits configured to implement this embodiment of the present invention, for example, one or more microprocessors (English full name: digital signal processor, DSP for short), or one or more field programmable gate arrays (English full name: field programmable gate array, FPGA for short).

The memory 1804 may be one storage apparatus, or may be a general term of a plurality of storage elements, and is configured to store executable program code, or parameters, data, and the like required for running of an access network management device. Moreover, the memory 1804 may include a random access memory (English full name: random-access memory, RAM for short), and may also include a non-volatile memory (English full name: non-volatile memory, NVRAM for short) such as a magnetic disk storage or a flash memory (Flash).

The bus 1805 may be an industry standard architecture (English full name: industry standard architecture, ISA for short) bus, a peripheral component interconnect (English full name: peripheral component, PCI for short) bus, an extended industry standard architecture (English full name: extended industry standard architecture, EISA for short) bus, or the like. The bus 1805 may be classified into an address bus, a data bus, a control bus, and the like. For convenience of representation, only one bold line is configured for representation in FIG. 18, but it does not indicate that there is only one bus or one type of bus.

The processor 1801 is configured to execute a program in the memory, so as to perform the method provided in the foregoing method embodiment with reference to the first interface circuit 1802 and the second interface circuit 1803.

Specifically, the processor 1801 is configured to execute a program in the memory to perform a function of the processing unit of the eNB in the foregoing embodiment.

The first interface circuit 1802 is configured to perform a function of the sending unit of the UE in the foregoing embodiment.

The second interface unit 1803 is configured to perform a function of the receiving unit of the UE in the foregoing embodiment.

The user equipment in this embodiment of the present invention may be configured to perform the foregoing method process. Therefore, for a technical effect that can be achieved, also refer to the foregoing method embodiment. Details are not described herein again in this embodiment of the present invention.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (English full name: read-only memory, ROM for short), a random access memory (English full name: random access memory, RAM for short), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A TTI configuration method, comprising:
receiving, by a network device, TTI request information, wherein the TTI request information indicates a TTI length requested to be used; and
responding to the TTI request information, and sending TTI indication information, wherein the TTI indication information comprises at least one of the following information:
a TTI length assigned by the network device, effective moment information, start symbol location information, and enabling confirm information of the TTI length.

2. The TTI configuration method according to claim 1, wherein before the receiving, by a network device, TTI request information, the method comprises:
broadcasting, by the network device, a TTI length supported by the network device.

3. The TTI configuration method according to claim 1, wherein the responding to the TTI request information comprises:
obtaining, according to information content of the TTI request information, the TTI length requested to be used, wherein the information content of the TTI request information corresponds to the TTI length requested to be used.

4. The TTI configuration method according to claim 1, wherein the responding to the TTI request information comprises:
obtaining, according to a resource occupied by the TTI request information, the TTI length requested to be used, wherein the occupied resource corresponds to the TTI length requested to be used.

5. The TTI configuration method according to claim 3, wherein the receiving, by a network device, TTI request information comprises:
receiving, by the network device, a random access preamble, wherein the random access preamble indicates the TTI length requested to be used;
the responding to the TTI request information comprises:
obtaining, according to the random access preamble, the TTI length requested to be used; and the sending TTI indication information comprises:
sending a random access response message, wherein the TTI indication information is indicated in the random access response message.

6. The TTI configuration method according to claim 5, wherein the indicating the TTI indication information in the random access response message comprises:
indicating the TTI indication information by adding a byte to the random access response message; or
indicating the TTI indication information by reusing one or more optional bits of an uplink scheduling grant message in the random access response message.

7. The TTI configuration method according to claim 4, wherein
the receiving, by a network device, TTI request information comprises:
receiving, by the network device, a random access preamble on a preset time-frequency resource, wherein the preset time-frequency resource corresponds to the TTI length requested to be used;
the obtaining, according to a resource occupied by the TTI request information, the TTI length requested to be used comprises:
obtaining, according to the preset time-frequency resource occupied by the random access preamble, the TTI length requested to be used; and
the sending TTI indication information comprises:
sending a random access response message, wherein the random access response message comprises the TTI indication information.

8. The TTI configuration method according to claim 4, wherein
the receiving, by a network device, TTI request information comprises:
receiving, by the network device, scheduling request information on a preset scheduling request resource, wherein the preset scheduling request resource corresponds to the TTI length requested to be used; and
the obtaining, according to a resource occupied by the TTI request information, the TTI length requested to be used comprises:
obtaining, according to a preset time-frequency resource occupied by the scheduling request information, the TTI length requested to be used.

9. The TTI configuration method according to claim 3, wherein
the receiving, by a network device, TTI request information comprises:
receiving, by the network device, a buffer status report message, wherein a value of one or more reserved bits of the buffer status report message indicates the TTI length that the user equipment requests to use; and
the obtaining, according to information content of the TTI request information, the TTI length requested to be used comprises:
obtaining, according to the value of the one or more reserved bits of the buffer status report message, the TTI length requested to be used.

10. The TTI configuration method according to claim 3, wherein
the receiving, by a network device, TTI request information comprises:
receiving, by the network device, a MAC CE, wherein an uplink LCID value in a message header of the MAC CE indicates that a type of the MAC CE is TTI request information, and a message body of the MAC CE indicates the requested TTI length;
the obtaining, according to information content of the TTI request information, the TTI length requested to be used comprises:
obtaining, according to the message header and the message body of the MAC CE, the TTI length requested to be used; and
the sending TTI indication information comprises:
sending a MAC CE, wherein a downlink LCID value in a message header of the MAC CE indicates that a type of the MAC CE is TTI indication information, and a message body of the MAC CE comprises the TTI indication information.

11. The TTI configuration method according to claim 3, wherein
the receiving, by a network device, TTI request information comprises:
receiving, by the network device, an RRC connection setup request message, wherein a TTI related information element of the RRC connection setup request message indicates the TTI length requested to be used;
the obtaining, according to information content of the TTI request information, the TTI length requested to be used comprises:
obtaining, according to the TTI related information element of the RRC connection setup request message, the TTI length requested to be used; and
the sending TTI indication information comprises:
sending an RRC connection setup message or an RRC reconfiguration message, wherein the RRC connection setup message or the RRC reconfiguration message comprises the TTI indication information.

12. The TTI configuration method according to claim 3, wherein
the sending TTI indication information comprises:
sending a handover command message, wherein the handover command message comprises the TTI indication information.

13. A TTI configuration method, comprising:
sending, by user equipment, TTI request information, wherein the TTI request information indicates a TTI length that the user equipment requests to use; and
receiving TTI indication information, wherein the TTI indication information comprises at least one of the following information:
a TTI length assigned to the user equipment, effective moment information, start symbol location information, and enabling confirm information of the TTI length.

14. The TTI configuration method according to claim 13, wherein before the sending, by user equipment, TTI request information, the method comprises:
receiving a supported TTI length.

15. The TTI configuration method according to claim 13, wherein the indicating, by the TTI request information, the TTI length that the user equipment requests to use comprises:
indicating, by using information content of the TTI request information, the TTI length that the user equipment requests to use, wherein the information content of the TTI request information corresponds to the TTI length that the user equipment requests to use.

16. The TTI configuration method according to claim 13, wherein the indicating, by the TTI request information, the TTI length that the user equipment requests to use comprises:
indicating, by using a resource occupied by the TTI request information, the TTI length that the user equipment requests to use, wherein the occupied resource corresponds to the TTI length that the user equipment requests to use.

17. The TTI configuration method according to claim 15, wherein
the sending, by user equipment, TTI request information comprises:
sending, by the user equipment, a random access preamble, wherein the random access preamble indicates the TTI length that the user equipment requests to use; and
the receiving TTI indication information comprises:
receiving a random access response message, wherein the TTI indication information is indicated in the random access response message.

18. The TTI configuration method according to claim 17, wherein the indicating the TTI indication information in the random access response message comprises:
indicating the TTI indication information by adding a byte to the random access response message; or
indicating the TTI indication information by reusing one or more optional bits of an uplink scheduling grant message in the random access response message.

19. The TTI configuration method according to claim 16, wherein
the sending, by user equipment, TTI request information comprises:
sending, by the user equipment, a random access preamble on a preset time-frequency resource, wherein the preset time-frequency resource corresponds to the TTI length that the user equipment requests to use; and
the receiving TTI indication information comprises:
receiving a random access response message, wherein the random access response message comprises the TTI indication information.

20. The TTI configuration method according to claim 16, wherein
the sending, by user equipment, TTI request information comprises:
sending, by the user equipment, scheduling request information on a preset scheduling request resource, wherein the preset scheduling request resource corresponds to the TTI length that the user equipment requests to use.

21. The TTI configuration method according to claim 15, wherein
the sending, by user equipment, TTI request information comprises:
sending, by the user equipment, a buffer status report message, wherein a value of one or more reserved bits of the buffer status report message indicates the TTI length that the user equipment requests to use.

22. The TTI configuration method according to claim 15, wherein
the sending, by user equipment, TTI request information comprises:
sending, by the user equipment, a MAC CE, wherein an uplink LCID value in a message header of the MAC CE indicates that a type of the MAC CE is TTI request information, and a message body of the MAC CE indicates the requested TTI length; and
the receiving TTI indication information comprises:
receiving a MAC CE, wherein a downlink LCID value in a message header of the MAC CE indicates that a type of the MAC CE is TTI indication information, and a message body of the MAC CE comprises the TTI indication information.

23. The TTI configuration method according to claim 15, wherein
the sending, by user equipment, TTI request information comprises:
sending, by the user equipment, an RRC connection setup request message, wherein a TTI related information element of the RRC connection setup request message indicates the TTI length that the user equipment requests to use; and
the receiving TTI indication information sent by the network device comprises:
receiving an RRC connection setup message or an RRC reconfiguration message, wherein the RRC connection setup message or the RRC reconfiguration message comprises the TTI indication information.

24. The TTI configuration method according to claim 15, wherein
the receiving TTI indication information comprises:
receiving a handover command message, wherein the handover command message comprises the TTI indication information.

25. A network device, comprising:
a receiving unit, configured to receive TTI request information, wherein the TTI request information indicates a TTI length requested to be used; and
a sending unit, configured to respond to the TTI request information received by the receiving unit, and send TTI indication information, wherein the TTI indication information comprises at least one of the following information:
a TTI length assigned by the network device, effective moment information, start symbol location information, and enabling confirm information of the TTI length.

26. The network device according to claim 25, wherein
the sending unit is further configured to: before the receiving unit receives the TTI request information, broadcast a TTI length supported by the network device.

27. The network device according to claim 25, wherein the network device further comprises:
a processing unit, configured to obtain, according to information content of the TTI request information, the TTI length requested to be used, wherein the information content of the TTI request information corresponds to the TTI length requested to be used.

28. The network device according to claim 25, wherein the network device further comprises:
a processing unit, configured to obtain, according to a resource occupied by the TTI request information, the TTI length requested to be used, wherein the occupied resource corresponds to the TTI length requested to be used.

29. The network device according to claim 27, wherein
the receiving unit is further configured to receive a random access preamble, wherein the random access preamble indicates the TTI length requested to be used;
the processing unit is further configured to obtain, according to the random access preamble, the TTI length requested to be used; and
the sending unit is further configured to send a random access response message, wherein the TTI indication information is indicated in the random access response message.

30. The network device according to claim 29, wherein the sending unit is further configured to:
indicate the TTI indication information by adding a byte to the random access response message; or
indicate the TTI indication information by reusing one or more optional bits of an uplink scheduling grant message in the random access response message.

31. The network device according to claim 28, wherein
the receiving unit is further configured to receive a random access preamble on a preset time-frequency resource, wherein the preset time-frequency resource corresponds to the TTI length requested to be used;
the processing unit is further configured to obtain, according to the preset time-frequency resource occupied by the random access preamble, the TTI length requested to be used; and
the sending unit is further configured to send a random access response message, wherein the random access response message comprises the TTI indication information.

32. The network device according to claim 28, wherein
the receiving unit is further configured to receive scheduling request information on a preset scheduling request resource, wherein the preset scheduling request resource corresponds to the TTI length requested to be used; and
the processing unit is further configured to obtain, according to a preset time-frequency resource occupied by the scheduling request information, the TTI length requested to be used.

33. The network device according to claim 27, wherein
the receiving unit is further configured to receive a buffer status report message, wherein a value of one or more reserved bits of the buffer status report message indicates the TTI length requested to be used; and
the processing unit is further configured to obtain, according to the value of the one or more reserved bits of the buffer status report message, the TTI length requested to be used.

34. The network device according to claim 27, wherein
the receiving unit is further configured to receive a MAC CE, wherein an uplink LCID value in a message header of the MAC CE indicates that a type of the MAC CE is TTI request information, and a message body of the MAC CE indicates the requested TTI length;
the processing unit is further configured to obtain, according to the message header and the message body of the MAC CE, the TTI length requested to be used; and
the sending unit is further configured to send a MAC CE, wherein a downlink LCID value in a message header of the MAC CE indicates that a type of the MAC CE is TTI indication information, and a message body of the MAC CE comprises the TTI indication information.

35. The network device according to claim 27, wherein
the receiving unit is further configured to receive an RRC connection setup request message, wherein a TTI related information element of the RRC connection setup request message indicates the TTI length requested to be used;
the processing unit is further configured to obtain, according to the TTI related information element of the RRC connection setup request message, the TTI length requested to be used; and
the sending unit is further configured to send an RRC connection setup message or an RRC reconfiguration message, wherein the RRC connection setup message or the RRC reconfiguration message comprises the TTI indication information.

36. The network device according to claim 27, wherein
the sending unit is further configured to send a handover command message, wherein the handover command message comprises the TTI indication information.

37. User equipment, comprising:
a sending unit, configured to send TTI request information, wherein the TTI request information indicates a TTI length that the user equipment requests to use; and
a receiving unit, configured to receive TTI indication information, wherein the TTI indication information comprises at least one of the following information:
a TTI length assigned to the user equipment, effective moment information, start symbol location information, and enabling confirm information of the TTI length.

38. The user equipment according to claim 37, wherein
the receiving unit is further configured to: before the sending unit sends the TTI request information, receive a supported TTI length.

39. The user equipment according to claim 37, wherein the user equipment further comprises:
a processing unit, configured to indicate, by using information content of the TTI request information, the TTI length that the user equipment requests to use, wherein the information content of the TTI request information corresponds to the TTI length that the user equipment requests to use.

40. The user equipment according to claim 37, wherein the user equipment further comprises:
a processing unit, configured to indicate, by using a resource occupied by the TTI request information, the TTI length that the user equipment requests to use, wherein the occupied resource corresponds to the TTI length that the user equipment requests to use.

41. The user equipment according to claim 39, wherein
the sending unit is further configured to send a random access preamble, wherein the random access preamble indicates the TTI length that the user equipment requests to use; and
the receiving unit is further configured to receive a random access response message, wherein the TTI indication information is indicated in the random access response message.

42. The user equipment according to claim 41, wherein the processing unit is further configured to:
indicate the TTI indication information by adding a byte to the random access response message; or
indicate the TTI indication information by reusing one or more optional bits of an uplink scheduling grant message in the random access response message.

43. The user equipment according to claim 40, wherein
the sending unit is further configured to send a random access preamble on a preset time-frequency resource, wherein the preset time-frequency resource corresponds to the TTI length that the user equipment requests to use; and
the receiving unit is further configured to receive a random access response message, wherein the random access response message comprises the TTI indication information.

44. The user equipment according to claim 40, wherein
the sending unit is further configured to send scheduling request information on a preset scheduling request resource, wherein the preset scheduling request resource corresponds to the TTI length that the user equipment requests to use.

45. The user equipment according to claim 39, wherein
the sending unit is further configured to send a buffer status report message, wherein a value of one or more reserved bits of the buffer status report message indicates the TTI length that the user equipment requests to use.

46. The user equipment according to claim 39, wherein
the sending unit is further configured to send a MAC CE, wherein an uplink LCID value in a message header of the MAC CE indicates that a type of the MAC CE is TTI request information, and a message body of the MAC CE indicates the requested TTI length; and
the receiving unit is further configured to receive a MAC CE, wherein a downlink LCID value in a message header of the MAC CE indicates that a type of the MAC CE is TTI indication information, and a message body of the MAC CE comprises the TTI indication information.

47. The user equipment according to claim 39, wherein
the sending unit is further configured to send an RRC connection setup request message, wherein a TTI related information element of the RRC connection setup request message indicates the TTI length that the user equipment requests to use; and
the receiving unit is further configured to receive an RRC connection setup message or an RRC reconfiguration message, wherein the RRC connection setup message or the RRC reconfiguration message comprises the TTI indication information.

48. The user equipment according to claim 39, wherein
the receiving unit is further configured to receive a handover command message, wherein the handover command message comprises the TTI indication information.

49. A network device, comprising a processor, a first interface circuit, a second interface circuit, a memory, and a bus, wherein the processor, the first interface circuit, the second interface circuit, and the memory are connected by using the bus and communicate with each other; and the processor is configured to execute program code in the memory to control the first interface circuit and the second interface circuit to perform the following operations:
the first interface circuit is configured to receive TTI request information, wherein the TTI request information indicates a TTI length requested to be used; and
the second interface circuit is configured to respond to the TTI request information received by the first interface circuit, and send TTI indication information to the user equipment, wherein the TTI indication information comprises at least one of the following information:
a TTI length assigned by the network device, effective moment information, start symbol location information, and enabling confirm information of the TTI length.

50. The network device according to claim 49, wherein
the second interface circuit is further configured to: before the receiving unit receives the TTI request information, broadcast a TTI length supported by the network device.

51. The network device according to claim 49, wherein the processor is further configured to:
obtain, according to information content of the TTI request information, the TTI length requested to be used, wherein the information content of the TTI request information corresponds to the TTI length requested to be used.

52. The network device according to claim 49, wherein the processor is further configured to:
obtain, according to a resource occupied by the TTI request information, the TTI length requested to be used, wherein the occupied resource corresponds to the TTI length requested to be used.

53. The network device according to claim 51, wherein
the first interface circuit is further configured to receive a random access preamble, wherein the random access preamble indicates the TTI length requested to be used;
the second interface circuit is further configured to obtain, according to the random access preamble, the TTI length requested to be used; and
the sending unit is further configured to send a random access response message, wherein the TTI indication information is indicated in the random access response message.

54. The network device according to claim 53, wherein the second interface circuit is further configured to:
indicate the TTI indication information by adding a byte to the random access response message; or
indicate the TTI indication information by reusing one or more optional bits of an uplink scheduling grant message in the random access response message.

55. The network device according to claim 52, wherein
the first interface circuit is further configured to receive a random access preamble on a preset time-frequency resource, wherein the preset time-frequency resource corresponds to the TTI length requested to be used;
the processor is further configured to obtain, according to the preset time-frequency resource occupied by the random access preamble, the TTI length requested to be used; and
the second interface circuit is further configured to send a random access response message, wherein the random access response message comprises the TTI indication information.

56. The network device according to claim 52, wherein
the first interface circuit is further configured to receive scheduling request information on a preset scheduling request resource, wherein the preset scheduling request resource corresponds to the TTI length requested to be used; and
the processor is further configured to obtain, according to a preset time-frequency resource occupied by the scheduling request information, the TTI length requested to be used.

57. The network device according to claim 51, wherein
the first interface circuit is further configured to receive a buffer status report message, wherein a value of one or more reserved bits of the buffer status report message indicates the TTI length requested to be used; and
the processing unit is further configured to obtain, according to the value of the one or more reserved bits of the buffer status report message, the TTI length requested to be used.

58. The network device according to claim 51, wherein
the first interface circuit is further configured to receive a MAC CE, wherein an uplink LCID value in a message header of the MAC CE indicates that a type of the MAC CE is TTI request information, and a message body of the MAC CE indicates the requested TTI length;
the processor is further configured to obtain, according to the message header and the message body of the MAC CE, the TTI length requested to be used; and
the second interface circuit is further configured to send a MAC CE, wherein a downlink LCID value in a message header of the MAC CE indicates that a type of the MAC CE is TTI indication information, and a message body of the MAC CE comprises the TTI indication information.

59. The network device according to claim 51, wherein
the first interface circuit is further configured to receive an RRC connection setup request message, wherein a TTI related information element of the RRC connection setup request message indicates the TTI length requested to be used;
the processor is further configured to obtain, according to the TTI related information element of the RRC connection setup request message, the TTI length requested to be used; and
the second interface circuit is further configured to send an RRC connection setup message or an RRC reconfiguration message, wherein the RRC connection setup message or the RRC reconfiguration message comprises the TTI indication information.

60. The network device according to claim 51, wherein
the second interface circuit is further configured to send a handover command message, wherein the handover command message comprises the TTI indication information.

61. User equipment, comprising a processor, a first interface circuit, a second interface circuit, a memory, and a bus, wherein the processor, the first interface circuit, the second interface circuit, and the memory are connected by using the bus and communicate with each other; and the processor is configured to execute program code in the memory to control the first interface circuit and the second interface circuit to perform the following operations:
the first interface circuit is configured to send TTI request information, wherein the TTI request information indicates a TTI length that the user equipment requests to use; and
the second interface circuit is configured to receive TTI indication information, wherein the TTI indication information comprises at least one of the following information:
a TTI length assigned to the user equipment, effective moment information, start symbol location information, and enabling confirm information of the TTI length.

62. The user equipment according to claim 61, wherein
the second interface circuit is further configured to: before the sending unit sends the TTI request information, receive a supported TTI length.

63. The user equipment according to claim 61, wherein the processor is further configured to:
indicate, by using information content of the TTI request information, the TTI length that the user equipment requests to use, wherein the information content of the TTI request information corresponds to the TTI length that the user equipment requests to use.

64. The user equipment according to claim 61, wherein the processor is further configured to:
indicate, by using a resource occupied by the TTI request information, the TTI length that the user equipment requests to use, wherein the occupied resource corresponds to the TTI length that the user equipment requests to use.

65. The user equipment according to claim 63, wherein
the first interface circuit is further configured to send a random access preamble, wherein the random access preamble indicates the TTI length that the user equipment requests to use; and
the second interface circuit is further configured to receive a random access response message, wherein the TTI indication information is indicated in the random access response message.

66. The user equipment according to claim 65, wherein the processor is further configured to:
indicate the TTI indication information by adding a byte to the random access response message; or
indicate the TTI indication information by reusing one or more optional bits of an uplink scheduling grant message in the random access response message.

67. The user equipment according to claim 64, wherein
the first interface circuit is further configured to send a random access preamble on a preset time-frequency resource, wherein the preset time-frequency resource corresponds to the TTI length that the user equipment requests to use; and
the second interface circuit is further configured to receive a random access response message, wherein the random access response message comprises the TTI indication information.

68. The user equipment according to claim 64, wherein
the first interface circuit is further configured to send scheduling request information on a preset scheduling request resource, wherein the preset scheduling request resource corresponds to the TTI length that the user equipment requests to use.

69. The user equipment according to claim 63, wherein
the first interface circuit is further configured to send a buffer status report message, wherein a value of one or more reserved bits of the buffer status report message indicates the TTI length that the user equipment requests to use.

70. The user equipment according to claim 63, wherein
the first interface circuit is further configured to send a MAC CE, wherein an uplink LCID value in a message header of the MAC CE indicates that a type of the MAC CE is TTI request information, and a message body of the MAC CE indicates the requested TTI length; and
the second interface circuit is further configured to receive a MAC CE, wherein a downlink LCID value in a message header of the MAC CE indicates that a type of the MAC CE is TTI indication information, and a message body of the MAC CE comprises the TTI indication information.

71. The user equipment according to claim 63, wherein
the first interface circuit is further configured to send an RRC connection setup request message, wherein a TTI related information element of the RRC connection setup request message indicates the TTI length that the user equipment requests to use; and
the second interface circuit is further configured to receive an RRC connection setup message or an RRC reconfiguration message, wherein the RRC connection setup message or the RRC reconfiguration message comprises the TTI indication information.

72. The user equipment according to claim 63, wherein
the second interface circuit is further configured to receive a handover command message, wherein the handover command message comprises the TTI indication information.

73. A communications system, comprising the network device according to any one of claims 25 to 36 and the user equipment according to any one of claims 37 to 48; or
comprising the network device according to any one of claims 49 to 60 and the user equipment according to any one of claims 61 to 72.
